# EUROPEAN PATENT APPLICATION

(11) **EP 4 380 237 A1**
(43) Date of publication of application: **05.06.2024**
(21) Application number: 21951151.6
(22) Date of filing: 26.07.2021
(51) Int. Cl.: H04W 48/08, H04W 48/06

(54) **ACCESS CONTROL METHOD, TERMINAL AND NETWORK DEVICE**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LU, Qianxi, Dongguan, Guangdong 523860 (CN); LI, Haitao, Dongguan, Guangdong 523860 (CN); LENG, Bingxue, Dongguan, Guangdong 523860 (CN)
(74) Representative: Taor, Simon Edward William
(86) International application number: PCT/CN2021/108389
(87) International publication number: WO 2023/004532

(57) **Abstract**

Provided in embodiments of the present invention are an access control method, a terminal device, and a network device, applied in the technical field of communications. The embodiments of the present invention comprise: receiving first information sent by a network device, the first information being used to prohibit the access of a first terminal, or the first information being used to allow access of the first terminal; and broadcasting second information to a remote terminal, the second information being information determined according to the first information.

## Description

### TECHNICAL FIELD

The present disclosure relates to the technical field of communication, in particular to a method for access control, a terminal device and a network device.

### BACKGROUND

In a sidelink (SL) relay scenario, a remote User Equipment (UE) establishes a connection with a relay UE through a proximity communication (PC5) interface (that is an interface between terminals), to connect to a network. If the remote UE is a reduced capability (RedCap) terminal, how the network device or the relay UE performs access control on the remote UE is an urgent problem to be solved.

### SUMMARY

The embodiments of the present disclosure provide a method for access control, a terminal device and a network device, which can perform access control on a remote terminal when the remote terminal is a RedCap terminal in the sidelink relay scenario.

A first aspect provides a method for access control, applied to a relay terminal, including following operation.

First information sent by a network device is received. The first information is used for barring access of a first terminal, or the first information is used for allowing the access of the first terminal. Second information is broadcast to a remote terminal. The second information is determined according to the first information.

A second aspect provides a method for access control, applied to a remote terminal, including following operation.

Second information broadcast by the relay terminal is received. The second information is used for barring access of a first terminal, or the second information is used for allowing the access of the first terminal.

A third aspect provides a method for access control, applied to a network device, including following operation.

First information is sent to a relay terminal. The first information is used for barring access of a first terminal, or the first information is used for allowing the access of the first terminal.

A fourth aspect provides a method for access control, applied to a remote terminal, including following operation.

A first signal strength is corrected according to an offset value to obtain a second signal strength. The first signal strength is a received reference signal strength of a relay terminal.

In response to the second signal strength being greater than an access strength threshold, the remote terminal accesses to the relay terminal.

A fifth aspect provides a relay terminal including a receiver and a transmitter.

The receiver is configured to receive first information sent by a network device. The first information is used for barring access of a first terminal, or the first information is used for allowing the access of the first terminal

The transmitter configured to broadcast second information to a remote terminal. The second information is determined according to the first information.

A sixth aspect provides a remote terminal including a receiver configured to receive second information sent by a relay terminal. The second information is used for barring access of a first terminal, or the second information is used for allowing the access of the first terminal.

A seventh aspect provides a network device including a transmitter configured to broadcast first information for a current cell. The first information is used for barring access of a first terminal, or the first information is used for allowing the access of the first terminal.

An eighth aspect provides a remote terminal including: a processor configured to correct a first signal strength according to an offset value to obtain a second signal strength. The first signal strength is a received reference signal strength of a relay terminal.

The processor is configured to access to the relay terminal in response to the second signal strength being greater than an access strength threshold.

A ninth aspect provides a computer-readable storage medium including: a computer instruction, where when the computer instruction is executed on a computer, causes the processor to perform one of the method of the first aspect or any optional implementation of the first aspects described above, or the method of the second aspect or any optional implementation of the second aspects described above, or the method of the third aspect or any optional implementation of the third aspect described above, or the method of the fourth aspect or any optional implementation of the fourth aspect described above.

A tenth aspect provides a computer program product including: a computer instruction. When the computer program product is executed on a computer, a processor executes the computer instruction to cause the processor to perform one of the method of the first aspect or any optional implementation of the first aspects described above, or the method of the second aspect or any optional implementation of the second aspects described above, or, the method of the third aspect or any optional implementation of the third aspect described above, or, the method of the fourth aspect or any optional implementation of the fourth aspect described above.

According to the method for access control provided in the embodiments of the present disclosure, the relay terminal may receive the first information sent by the network device, the first information is used for barring access of a first terminal, or the first information is used for allowing the access of the first terminal. The relay terminal may broadcast the second information determined according to the first information to the remote terminal. The first terminal may be at least one of a RedCap terminal or a non-RedCap terminal. In this way, the network device may indicate through the first information whether the access of the RedCap terminal and/or the non-RedCap terminal is allowed, and the relay terminal determines second information according to the first information and a situation of the relay terminal after obtaining the first information, and indicates through the second information whether the access of the RedCap terminal and/or the non-RedCap terminal is allowed. Therefore, the access control can be performed on the remote UE in the SL relay scenario.

### BRIEF DESCRIPTION OF THE DRAWINGS

FIG. 1 is a schematic diagram of architecture of a communication system in the SL relay scenario according to an embodiment of the present disclosure.
FIG. 2 is a first schematic diagram of a method for access control according to an embodiment of the present disclosure.
FIG. 3 is a second schematic diagram of a method for access control according to an embodiment of the present disclosure.
FIG. 4 is a schematic diagram corresponding to a first embodiment according to an embodiment of the present disclosure.
FIG. 5 is a schematic diagram corresponding to a second embodiment according to an embodiment of the present disclosure.
FIG. 6 is a schematic diagram corresponding to a third embodiment according to an embodiment of the present disclosure.
FIG. 7 is a schematic diagram corresponding to a fourth embodiment according to an embodiment of the present disclosure.
FIG. 8 is a schematic structural diagram of a relay terminal according to an embodiment of the present disclosure.
FIG. 9 is a schematic structural diagram of a remote terminal according to an embodiment of the present disclosure.
FIG. 10 is a schematic structural diagram of a network device according to an embodiment of the present disclosure.
FIG. 11 is a second schematic structural diagram of a remote terminal according to an embodiment of the present disclosure.
FIG. 12 is a schematic structural diagram of a terminal device according to an embodiment of the present disclosure.
FIG. 13 is a schematic structural diagram of a base station according to an embodiment of the present disclosure.

### DETAILED DESCRIPTION

The technical scheme of the embodiments of the present disclosure will be described below in combination with the accompanying drawings of the embodiments of the present disclosure. It is apparent that the described embodiments are only a part, rather than all, of the embodiments of the present disclosure. Based on the embodiments in the present disclosure, all other embodiments acquired by those skilled in the art without paying inventive effort shall fall within the scope of protection of the present disclosure.

A brief description of some terms involved in the present disclosure is given below.

### 5G NR

At present, the research of 5G (5th Generation Mobile Communication Technology) New Radio (NR) considers two frequency ranges: the Frequency range 1 (FR1) and the Frequency range 2 (FR2). Frequency domain ranges of FR1 and FR2 are shown in Table 1. It should be understood that the embodiments of the present disclosure may be applied to FR1 and FR2 as well as to other frequency ranges, such as 52.6 GHz to 71 GHz, 71 GHz to 100GHz and the like, which is not limited in the present disclosure.

**Table 1**

| Frequency range definition | Frequency range |
|---|---|
| FR1 | 410 MHz-7.125 GHz |
| FR2 | 24.25 GHz-52. 6 GHz |

An application scenario of the 5G includes Enhanced Mobile Broadband (eMBB), Ultra-Reliable and Low Latency Communications (URLLC), and Massive Machine Type Communication (mMTC).

In related technologies, the NR may be deployed separately. In the 5G network environment, a new Radio Resource Control (RRC) state, i.e., the RRC_inactive state, is defined for the purpose of reducing radio signaling, quickly restoring wireless connection and quickly restoring data traffic. The RRC_inactive state is different from the RRC_idle state and the RRC_connected state. The above three RRC states in 5G network environment are explained respectively as following.

For the RRC_idle state, mobility is UE-based cell reselection, paging is initiated by a core network, a paging area is configured by the core network, and there is no user equipment (UE) access layer (AS) context and RRC connection at the base station side.

For the RRC_connected state, there is an RRC connection, and there is the UE AS context between the base station and UE, the network side knows a position of the UE at a level of a specific cell, the mobility is controlled by the network side, and unicast data may be transmitted between the UE and the base station.

For the RRC_inactive state, the mobility is a UE-based cell selection/cell reselection, the core network (CN) may connected to the NR, there is UE AS context at a base station, the paging is triggered by the Radio Access Network (RAN), an RAN-based paging area is managed by the RAN, and network side knows the position of the UE at a level of an RAN-based paging area

### Application scenarios for the RedCap terminal

In addition to the application scenarios, such as the eMBB and the URLLC supported in R15/R16 NR, the Internet of Things of the terminals, such as industrial wireless sensors, video surveillance and wearable devices put forward new requirements for 5G terminals, such as reducing complexity, reducing cost, size calibration and energy consumption. Therefore, the RedCap terminal is introduced in R17 NR. At present, the RedCap terminal has three scenarios: the industrial wireless sensors, the video surveillance and the wearables.

The industrial wireless sensors have relatively low delay and reliability compared with the URLLC, and lower cost and power consumption than the URLLC and the eMBB. The main requirements and characteristics of the industrial wireless sensors include communication reliability of 99.99%, an end-to-end delay less than 100 ms, a reference data rate less than 2 Mbps. A main traffic of the sensors is uplink traffic, and the sensors are static and require the battery life of several years. The safety-related sensors have lower delay requirement from 5 ms to 10 ms.

The video surveillance is mainly applied to the visual communication surveillance in the smart city and the industrial factory. The video surveillance may be used for the data collection and processing in the smart city, to effectively monitor and control the urban resources, and provide effective services for the urban residents. The video surveillance is mainly used for uplink traffic, and other main requirements of the video surveillance include a reference rate of a common definition video from 2 Mbps to 4 Mbps, the delay less than 500 ms, and the communication reliability from 99% to 99.9%. A rate requirement of High Definition (HD) video is 7.5 Mbps to 25 Mbps.

The wearables include smart watches, smart bracelets, electronic health devices and some medical monitoring devices. These wearables are all small-sized. Requirements for key indicators of the wearables devices include a downlink reference rate from 5 Mbps to 50 Mbps and an uplink reference rate from 2 Mbps to 5 Mbps, a downlink peak rate of 150 Mbps and an uplink peak rate of 50 Mbps. The battery is required to work for several days or even 1 to 2 weeks.

### A scheme of reducing complexity and cost of a terminal

For eMBB applications, in order to provide a high peak rate, high frequency efficiency and a large network capacity, 3GPP standard puts forward a high requirement for the eMBB UE. For example, for the NR FR1, the eMBB UE needs to support functions and performance indicators, such as, 100 MHz carrier bandwidth, 4 receiving links (i.e., 4 Rx), 4-stream Multiple Input Multiple Output (MIMO) transmission, 256 Quadrature Amplitude Modulation (QAM) modulation and a peak rate having a value higher than 1 Gbps, which puts forward a high requirement for the processing capability of RF devices and baseband chips of the terminal, and thus requires a high-complexity and high-cost eMBB UE.

The following aspects are mainly studied in R17 RedCap Study Item (SI) stage, to reduce the capability requirements for a RedCap UE, so as to reduce the complexity and cost.

In a first aspect, the maximum bandwidth of the UE is reduced.

In order to enable the RedCap UE and the non-RedCap UE to share the same Synchronization Signal (SS) block or the same Physical Broadcast Channel (PBCH) block, the control-resource set (CORESET) 0 and the System Information Block (SIB) 1 do not coexist. The 3GPP has agreed through discussions to reduce the maximum bandwidth of the RedCap UE in the FR1 from 100 MHz to 20 MHz. Moreover, the maximum bandwidth of the RedCap UE in the FR2 is reduced to 100 MHz.

In a second aspect, the number of UE Rx antennas is reduced.

In frequency ranges where a common NR UE (i.e., a non-RedCap UE) is required to support at least 2 receiving antenna ports, the minimum number of receiving antennas supported by the RedCap UE is 1. In the frequency ranges, the number of the receiving antennas of the RedCap UE may also be 2.

In frequency ranges where the normal NR UE is required to support at least 4 receiving antenna ports, the minimum number of the receiving antennas supported by the RedCap UE is 1. In the frequency ranges, the number of the receiving antennas of the RedCap UE may also be 2.

In a third aspect, the number of UE MIMO layers is reduced.

The RedCap UE having 1 receiving antenna supports 1 layer of DownLink (DL) MIMO.

The RedCap UE having 2 receiving antennas supports 2 layers of the DL MIMO.

In a fourth aspect, the highest modulation order is reduced

A lower modulation order may be used to reduce the requirements for processing capacity of RF devices and baseband chips. In the SI stage, the following options are mainly studied for reducing the highest modulation order.

For uplink (UL):
- FR1: the highest modulation order is reduced from 64 QAM to 16 QAM.
- FR2: the highest modulation order is reduced from 64 QAM to 16 QAM.

For DL:
- FR1: the highest modulation order is reduced from 256 QAM to 64 QAM.
- FR2: the maximum modulation order is reduced from 64 QAM to 16 QAM.

In a fifth aspect, Half duplex Frequency Division Duplexing (FDD) is used

Compared with the full duplex FDD, a RedCap UE adopting the half duplex FDD mode may send and receive at different times respectively at different frequencies. A diplexer with the high cost can be replaced with a transceiver antenna switch and lowpass filter with lower cost in implementation.

Two half duplex FDD modes including Type A and Type B are defined for the UE in the Long Term Evolution (LTE). Considering that half duplex FDD mode Type B is too complex, 3GPP RAN decides through discussions that Rel-17 FDD RedCap UE supports the operations of the half duplex FDD mode Type B.

In a sixth aspect, processing time of the terminal is relaxed.

The UE needs processing time from receiving the Physical Uplink Shared Channel (PDSCH) to sending the uplink Hybrid Automatic Repeat Request (HARQ) feedback, and from receiving the Physical Downlink Control Channel (PDCCH) indicating uplink scheduling to sending the Physical Uplink Shared Channel (PUSCH). the processing time decreases with the improvement of the processing capacity of the UE hardware. The requirement for the processing time of the UE is lowered, to allow the long processing time, and the requirement for a processing module of a receiver and the cost of the UE are reduced.

In a seventh aspect, the maximum number of Data Radio Bearers (DRBs) that the terminal is forced to support is reduced.

In Rel-15/Rel-16, the maximum number of DRBs supported by the UE is 8, and the capability is a required for the UE. According to the three application scenarios supported by the RedCap at present, UE generally does not have multiple parallel traffics simultaneously. In addition, the number of DRBs may directly affect the buffer size and memory size of the UE. Therefore, it may be considered to reduce the cost of the terminal by reducing the maximum number of DRBs supported by the UE.

In an eighth aspect, the buffer size of the Layer-2 is reduced.

The Layer-2 is the L2 layer which includes the Radio Link Control (RLC) layer and the Packet Data Convergence Protocol (PDCP) layer.

The buffer size of the L2 layer depends on the number of uplink peaks and downlink peaks and the Radio Link Control (RLC) Round-Trip Time (RTT). Compared with Rel-15/Rel-16 NR UE, the peak rate required by the RedCap UE is reduced, and the buffer size of the L2 of the RedCap UE may be reduced accordingly.

In a ninth aspect, the length of the Packet Data Convergence Protocol (PDCP) Sequence Number (SN) or the length of RLC SN is reduced.

The length of the RLCSN or the length of the PDCP SN is associated with the length of the sliding window supported by the RLC layer or PDCP layer. In Rel-15/Rel-16, an 18-bit SN length must be supported for the PDCP Acknowledged Mode (AM) and the RLC AM. If the buffer size of the RedCap UE is reduced compared with Rel-15/Rel-16, it is not necessary for the RedCap UE to support 18-bit RLC SN length or 18-bit PDCP SN length.

### Cellbarred mechanism is provided

In an initial access stage, the UE reads the Master Information Block (MIB) after obtaining the time-frequency domain synchronization. The MIB contains following two parameters associated with the cell selection and cell reselection:
cellBarred ENUMERATED {barred, notBarred}; and
IntraFreqResection ENUMERATED {allowed, not allowed}.

The cellBarred in the MIB indicates whether the current cell is barred for all UEs. If the cellBarred indicates that the cell is barred, UEs in the RRC_idle state and the RRC_inactive state cannot reside in the cell.

The IntraFreqResection in the MIB indicates whether the UE is allowed to select or re-select the sub optimal cell at the current frequency if the current cell is the optimal cell at the current frequency and the UE is not allowed to reside in the current cell.

In a process of Rel-17 standardization, the 3GPP discusses that a separate cellbarred mechanism is introduced for the RedCap terminal, so that a network device may separately control network access of the RedCap UE and network access of the non-RedCap UE. In the recently concluded 3GPP RAN2#104e session, following three conclusions were reached for the cellbarred mechanism of the RedCap terminals.

First, the network may perform cell barring indication respectively for the RedCap UE having 1 receiving antenna and the RedCap UE having 2 receiving antennas through the SIB 1.

Secondly, the cell barring for the RedCap UE is based on per cell (rather than Public Land Mobile Network (PLMN)).

Thirdly, the RedCap UE supports the intra frequency reselection indicator.

In the sidelink relay scenario, a remote UE establishes a connection with a relay UE through the PC5 interface, to connect to a network. If the remote UE is a RedCap terminal, how the network or the relay UE performs the access control of the remote UE is a problem that needs to be solved from the standard level.

The embodiment of the present disclosure provides a method for access control. A relay terminal may receive first information sent by a network device, where the first information is used for barring access of a first terminal, or the first information is used for allowing the access of the first terminal. The first terminal may be at least one of a RedCap terminal or a non-RedCap terminal. In this way, the network device may indicate whether to allow the access of the RedCap terminal and/or the non-RedCap terminal through the first information, and the relay terminal indicates whether to allow the access of the RedCap terminal and/or the non-RedCap terminal according to the first information after obtaining the first information. Therefore, the access control may be performed on the remote UE in the SL relay scenario.

The terminal (including the relay terminal and the remote terminal) in the embodiments of the present disclosure are also called as the terminal device, and embodiments of the present disclosure are described in connection with a network device and a terminal device. The terminal device may also be referred to as user equipment (UE), an access terminal, a user unit, a user station, a mobile station, a remote station, a remote terminal, a mobile device, a user terminal, a terminal, a wireless communication device, a user agent or a user device, etc.

The terminal device may be a station (ST) in the WLAN, a cellular telephone, a cordless telephone, a session initiation protocol (SIP) telephone, a wireless local loop (WLL) station, a personal digital assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved public land mobile network (PLMN) network, etc.

In the embodiments of the present disclosure, the terminal device may be deployed on land including indoors or outdoors, or may be hand-held, wearable or vehicle-mounted. The terminal device may also be deployed on the water (such as on the ships, etc.). The terminal device may also be deployed in the air (such as, in airplanes, in balloons and in satellites, etc.).

In the embodiments of the present disclosure, the terminal device may be a mobile phone, a Pad, a computer with wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of example and not limitation, in the embodiments of the present disclosure, the terminal device may also be a wearable device. The wearable device may also be referred to as a wearable smart device, which is a general term of wearable devices that are intelligently designed and developed by applying wearable technology to daily wearing, such as, glasses, gloves, watches, clothing and shoes. The wearable device is a portable device that is worn directly on the body or integrated into the user's clothes or accessories. The wearable device is not only a hardware device, but also realizes powerful functions through software support, data interaction and cloud interaction. The generalized wearable smart device has full functions and a large size, and may realize complete or partial functions without relying on smart phones, such as smart watches or smart glasses, or only focus on certain application functions and may be used in conjunction with other devices (such as, smart phones), such as, various smart bracelets and smart jewelry for monitoring physical signs.

The network device may also include an access network device and a core network device. That is, the wireless communication system also includes multiple core networks for communicating with the access network device. The access network device may be an evolutional node B (eNB or e-NodeB) macro base station, a micro base station (also called as a "small base station"), a pico base station, an Access Point (AP), a Transmission Point (TP) or a new generation Node B (gNodeB) in a Long-Term Evolution (LTE) system, a Next Radio (NR) system or an Authorized Auxiliary Access Long-Term Evolution (LAA) system.

In the embodiments of the present disclosure, the network device may be a device configured to communicate with a mobile device, and the network device may be an access point (AP) in a WLAN, a base transceiver station (BTS) in a GSM or CDMA, a NodeB (NB) in a WCDMA, an evolutional Node B (eNB or eNodeB) in an LTE, a relay station or an access point, a vehicle-mounted device, a wearable device, a network device or a gNB in an NR network, a network device in a future evolved PLMN network or a network device in an NTN network, etc.

By way of example and not limitation, the network device in the embodiments of the present disclosure may have mobility, for example, the network device may be a mobile device. Optionally, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station located on land, water, etc.

In the embodiments of the present disclosure, the network device may provide a service for a cell, and the terminal device communicates with the network device through transmission resources (e.g., frequency resources, or spectrum resources) used by the cell. The cell may be a cell corresponding to the network device (e.g., base station), and the cell may belong to a macro base station or a base station corresponding to a small cell. The small cell may include a metro cell, a micro cell, a Pico cell, a Femto cell, etc. These small cells have characteristics of small coverage and low transmission power, and are suitable for providing a high-speed data transmission service.

The technical scheme in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system for NR system, a LTE-based access to unlicensed spectrum (LTE-U) system, a NR-based access to unlicensed spectrum (NR-U) system, a non-terrestrial networks (NTN) system, a universal mobile telecommunication system (UMTS), a wireless local area network (WLAN), a wireless fidelity (Wi-Fi), a 5th-generation (5G) system or other communication systems.

Generally, traditional communication systems support a limited number of connections and are easy to implement. However, with the development of communication technology, mobile communication systems not only supports traditional communication, but also supports, for example, D2D communication, machine to machine (M2M) communication, machine type communication (MTC), vehicle to vehicle (V2V) communication, or V2X communication, etc. The embodiments of the present disclosure may also be applied to these communication systems.

The communication system in the embodiments of the present disclosure may be applied to a carrier aggregation (CA) scenario, a dual connectivity (DC) scenario, and a standalone (SA) network distribution scenario.

Optionally, the communication system in the embodiments of the present disclosure may be applied to the unlicensed spectrum, and the unlicensed spectrum may also be considered as a shared spectrum. Alternatively, the communication system in the embodiments of the present disclosure may also be applied to a licensed spectrum, and the licensed spectrum may also be considered as a non-shared spectrum.

Optionally, the embodiments of the present disclosure may be applied to the Non-Terrestrial Networks (NTN) system or may be applied to the Terrestrial Networks (TN) system.

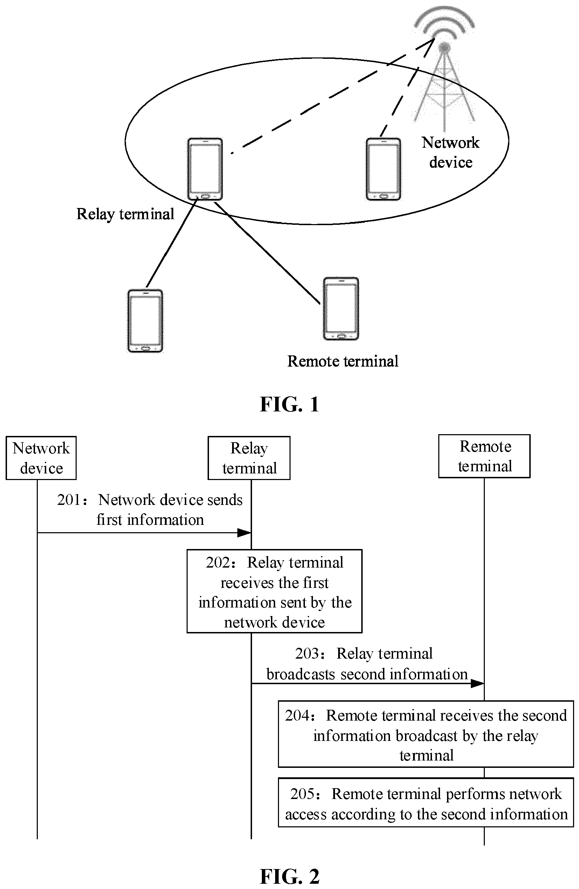

Exemplary, FIG. 1 is a schematic diagram of architecture of a communication system in the SL relay scenario. The system includes a network device and one or more relay terminals within a coverage area of the network device, and one or more remote terminals within a broadcast area of a relay terminal. It should be noted that FIG. 1 is only an exemplary illustration of the scenario, and the system may include more or fewer network devices, relay terminals and remote terminals in the practice scenarios.

It should be understood that the terms "system" and "network" are often used interchangeably herein. In the present disclosure, the term "and/or" defines only an association relationship describing associated objects and represents that three relationships may exist. For example, A and/or B may represent three conditions: i.e., independent existence of A, existence of both A and B and independent existence of B. In addition, the character "/" in the present disclosure generally indicates that there is an "or" the relationship between the related objects.

It should be understood that the reference to "indication" in the embodiments of the present disclosure may be a direct indication, or an indirect indication, or may be indicative of an association relationship. For example, A indicates B, which can mean that A directly indicates B, for example, B may be obtained through A, it can also mean that A indirectly indicates B, for example, A indicates C, and B may be obtained through C, it can also indicate that there is an association relationship between A and B.

In the description of the embodiments of the present disclosure, the term "correspondence" may mean that there is a direct correspondence or an indirect correspondence between the two objects, or may also mean that there is an association relationship between the two objects, or may also be an indication relationship or a configuration relationship.

Optionally, the indication information in the embodiments of the present disclosure includes physical layer signaling, such as at least one of Downlink Control Information (DCI), a Radio Resource Control (RRC) signaling or Media Access Control Control Element (MAC CE).

Optionally, the high layer parameters or high layer signaling in the embodiments of the present disclosure include at least one of a Radio Resource Control (RRC) signaling or Media Access Control Control Element (MAC CE).

The technical solution of the present disclosure is further described below by way of embodiments. The embodiments of the present disclosure include some or all of following contents.

As shown in FIG. 2, the embodiment of the present disclosure provides a method for access control including operations 201 to 205.

In operation 201, a network device sends first information.

The first information is used for barring access of a first terminal, or the first information is used for allowing the access of the first terminal.

The network device may send the first information through a broadcast message, or the network device may send the first information by high-layer signaling.

Optionally, the first terminal is a RedCap terminal and a non-RedCap terminal.

That is to say, the first information may be used for barring the access of the RedCap terminal, or the first information is used for allowing the access of the RedCap terminal.

The first information may also be used for barring the access of the non-RedCap terminal, or the first information is used for allowing the access of the non-RedCap terminal.

The first information may also be used for barring the accesses of the RedCap terminal and the non-RedCap terminal, or the first information is used for allowing the accesses of the RedCap terminal and the non-RedCap terminal.

Optionally, the first information is used for controlling at least one of following access manners of the first terminal: accessing to a network through an Uu interface and accessing to the relay terminal through a proximity communication (PC5) interface.

The remote terminal may access to the network device directly through the Uu interface between the terminal and the network device.

The remote terminal may access to the relay terminal through the PC5 interface between the terminals. In case where the relay terminal accesses to the network, the remote terminal may access to the network device through the relay terminal.

Optionally, the above first information may include, but is not limited to, following two implementations.

In the first implement, the first information includes at least one cell barred indication.

The at least one cell barred indication in the first information is used for barring the access of the first terminal, or the at least one cell barred indication in the first information is used for allowing the access of the first terminal.

Optionally, the cell barred indication in the first information may be a cellBarred indication.

Optionally, the at least one cell barred indication in the first information corresponds to at least one cell. That is to say, there may be following two cases.

In a first case, the at least one cell barred indication in the first information corresponds to one cell.

Exemplarily, in the CA scenario, the cell may be a primary cell (PCell). Optionally, the primary cell may be the primary cell of the relay terminal.

In a second case, the at least one cell barred indication in the first information corresponds to multiple cells.

Exemplarily, in the CA scenario, the multiple cells may be a primary cell and at least one secondary cell. Optionally, the primary cell and at least one secondary cell may be the primary cell and at least one secondary cell of the relay terminal.

Optionally, for each cell of the at least one cell, different cell barred indications in at least one cell barred indication corresponding to the cell correspond to first terminals of different terminal types.

For example, for two first terminals of terminal type A and terminal type B, two cell barred indications are configured in the first information for a cell. One cell barred indication is used for indicating whether the first terminal of terminal type A may access to the network and the other cell barred indication is used for indicating whether the first terminal of terminal type B may access to the network.

In a second implementation, in response to the first information including at least one resource pool indication for the first terminal, the first information is used for allowing the access of the first terminal.

In response to the first information including no at least one resource pool indication for the first terminal, the first information is used for barring the access of the first terminal.

Optionally, the at least one resource pool indication in the first information corresponds to at least one cell. That is to say, there may be the following two cases.

In a first case, the at least one resource pool indication in the first information corresponds to one cell.

Exemplarily, in the CA scenario, the cell may be a primary cell (PCell). Optionally, the primary cell may be the primary cell of the relay terminal.

In a second case, the at least one resource pool indication in the first information corresponds to multiple cells.

Exemplarily, in the CA scenario, the multiple cells may be a primary cell and at least one secondary cell. Optionally, the primary cell and at least one secondary cell may be the primary cell and at least one secondary cell of the relay terminal.

Optionally, for each cell of the at least one cell, different cell barred indications in at least one cell barred indication corresponding to the cell correspond to first terminals of different terminal types.

Optionally, resource pools corresponding to different terminal types do not overlap with each other in at least one of time domain or frequency domain. That is to say, multiple different resource pool indications are used to indicate resource pools of multiple types. Each terminal type corresponds to one resource pool or multiple resource pools, and the time-domain resources and/or the frequency-domain resources of the resource pools corresponding to different terminal types do not overlap with each other.

Optionally, if the first terminal includes a RedCap terminal and a non-RedCap terminal, the first information may include two resource pool indications. One resource pool indication is used for indicating a resource pool of the RedCap terminal and the other resource pool indication is used for indicating a resource pool of the non-RedCap terminal.

A resource pool for the RedCap terminal does not overlap with a resource pool for the non-RedCap terminal in at least one of the time domain or the frequency domain.

Optionally, the resource pool according to the embodiments of the present disclosure may include at least one of a receiving resource pool or a sending resource pool.

Optionally, the terminal type according to the embodiments of the present disclosure may be distinguished by at least one of a transmission rate, a number of receiving antennas, a number of transmitting antennas, a maximum bandwidth, a supported frequency range, or a terminal scenario.

In operation 202, a relay terminal receives the first information sent by the network device.

In operation 203, the relay terminal broadcasts second information.

In operation 204, the remote terminal receives the second information broadcast by the relay terminal.

The second information is used for barring access of a first terminal, or the second information is used for allowing the access of the first terminal.

Optionally, the second information is determined according to the first information.

Optionally, after the operation 202 and before the operation 203, the relay terminal may determine the second information according to the first information.

The second information may include, but is not limited to, following two different cases.

In a first case, the second information is the first information. That is to say, after receiving the first information, the relay device forwards and broadcasts the first information.

In a second case, the relay device determines the second information based on the first information and its own condition (e.g. its own load condition, its own power consumption, etc.) and broadcasts the second information.

Optionally, for the first information in the first implementation, the second information includes at least one cell barred indication. The cell barred indication in the second information is used for barring the access of the first terminal, or the cell barred indication in the second information is used for allowing the access of the first terminal.

In response to a cell barred indication in the first information barring the access of the first terminal, a cell barred indication in the second information is used for barring the access of the first terminal.

In response to the cell barred indication in the first information allowing the access of the first terminal, the cell barred indication in the second information is used for barring the access of the first terminal, or the cell barred indication in the second information is used for allowing the access of the first terminal.

Optionally, the at least one cell barred indication in the second information corresponds to at least one cell.

Optionally, for each cell of the at least one cell, different cell barred indications in at least one cell barred indication corresponding to the cell correspond to first terminals of different terminal types.

Optionally, the method further includes: in response to the remote terminal being the first terminal and a terminal type of the remote terminal is a first type, performing the network access according to a target cell barred indication.

The target cell barred indication is an indication corresponding to the first type among at least one cell barred indication in the second information.

Optionally, the cell barred indication in the second information may also be a cellBarred indication.

In another possible implementation, after receiving the first information, the relay terminal may generate the second information according to the first information. In response to the second information including at least one resource pool indication for the first terminal, the second information indicates allowing the access of the first terminal. In response to the second information including no at least one resource pool indication for the first terminal, the second information indicates barring the access of the first terminal.

Optionally, the at least one resource pool indication in the second information corresponds to at least one cell.

Optionally, for each cell of the at least one cell, different resource pool indications in at least one resource pool indication corresponding to the cell correspond to first terminals of different terminal types.

Optionally, for the first information in the second implementation, the second information may be as follows.

In response to the first information including at least one resource pool indication for the first terminal, the second information includes at least one resource pool indication for the first terminal, or the second information includes no at least one resource pool indication for the first terminal.

In response to the first information including no at least one resource pool indication for the first terminal, the second information includes no at least one resource pool indication for the first terminal.

In another possible implementation, after receiving the first information, the relay terminal may generate second information according to the first information. The second information includes at least one cell barred indication used for barring the access of the first terminal or allowing the access of the first terminal.

In operation 205, the remote terminal performs network access according to the second information.

In an optional implementation, in response to the remote terminal being the first terminal, the remote terminal may perform network access according to the cell barred indication in the second information.

In an optional implementation, in response to the remote terminal being the first terminal and a terminal type of the remote terminal is a first type, the remote terminal may perform the network access according to a target cell barred indication.

The target cell barred indication is an indication corresponding to the first type among at least one cell barred indication.

In an optional implementation, in response to the remote terminal being the first terminal and receiving the at least one resource pool indication, the remote terminal may access to network.

In an optional implementation, in response to the remote terminal being the first terminal and receiving no at least one resource pool indication, the remote terminal may not access to the network.

In an optional implementation, in response to the remote terminal being the first terminal and a terminal type of the remote terminal is the first type, the remote terminal may determine to be allowed to access to the network when the received resource pool indication includes the target resource pool indication. The target resource pool indication indicates a resource pool corresponding to first type of the terminal type.

Furthermore, in response to the remote terminal being the first terminal and the second information allowing the access of the first terminal, the remote terminal may correct a first signal strength according to an offset value to obtain a second signal strength. The first signal strength is a received reference signal strength of a relay terminal. In response to the second signal strength being greater than or equal to an access strength threshold, the remote terminal accesses to the relay terminal. That is to say, it is determined that the relay terminal provides relay service for the remote terminal.

Exemplarily, the offset value is identified by offset, offset=max (P_{PowerClass, relay UE}-P_{PowerClass remote UE}, 0), where P_{PowerClass, relay UE} is the power level of the relay terminal and P_{PowerClass remote UE} represents the power level of the remote terminal.

Optionally, the reference signal strength may be represented by a Reference Signal Received Power (RSRP) of the reference signal, and/or a Reference Signal Received Quality (RSRQ) of the reference signal.

The access strength threshold may be a preset access threshold of the RSRP and/or a preset access threshold of the RSRQ.

Optionally, the offset value is determined by at least one of following three manners.

The offset value may be configured by a network device.

The offset value may be preconfigured by the remote terminal.

The offset value may be determined based on a difference between a power level of the relay terminal and a power level of the remote terminal.

Exemplarily, the offset value is identified by offset, offset=max (P_{PowerClass, relay UE}-P_{PowerClass remote UE}, 0), where P_{PowerClass, relay UE} is the power level of the relay terminal and P_{PowerClass remote UE} represents the power level of the remote terminal.

In the above solution, the offset value is further introduced, and it is determined whether the corrected second signal strength is greater than or equal to the access strength threshold. In a case where the second signal strength is greater than or equal to the access strength threshold, the remote terminal accesses to the relay terminal, which can ensure normal transmissions on both the remote UE and the relay UE.

In the method for access control provided in the embodiment of the present disclosure, the relay terminal may receive the first information sent by the network device, where the first information is used for barring access of a first terminal, or the first information is used for allowing the access of the first terminal, and the relay terminal may broadcast the second information determined according to the first information to the remote terminal. The first terminal may be at least one of a RedCap terminal or a non-RedCap terminal. In this way, the network device may indicate whether to allow the access of the RedCap terminal and/or the non-RedCap terminal through the first information, and the relay terminal determines the second information according to the first information and its own situation after obtaining the first information, and the relay terminal may indicate whether to allow the access of the RedCap terminal and/or the non-RedCap terminal through the second information. Therefore, the access control may be performed on the remote UE in the SL relay scenario.

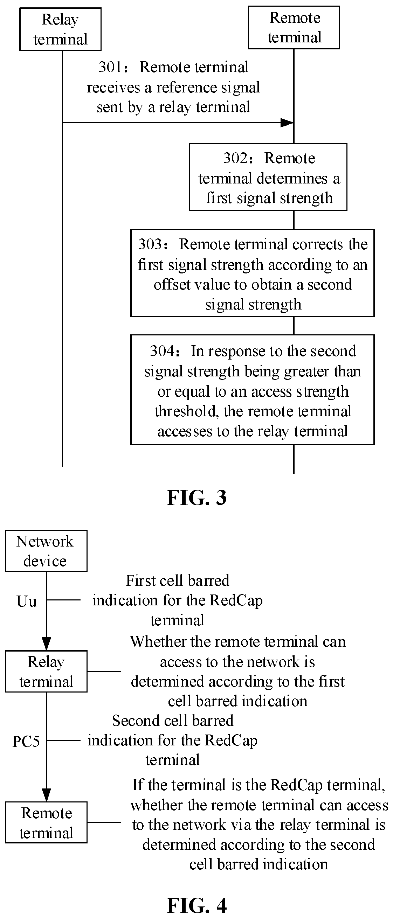

As shown in FIG. 3, the embodiment of the present disclosure also provides a method for access control including operations 301 to 304.

In operation 301, a remote terminal receives a reference signal sent by a relay terminal.

In operation 302, the remote terminal determines a first signal strength.

The first signal strength is a received reference signal strength of a relay terminal.

In operation 303, the remote terminal corrects the first signal strength according to an offset value to obtain a second signal strength.

Exemplarily, a first RSRP represents the first signal strength and a second RSRP represents the second signal strength, then the second RSRP=the first RSRP-offset.

In operation 304, in response to the second signal strength being greater than or equal to an access strength threshold, the remote terminal accesses to the relay terminal.

Optionally, the offset value is determined by at least one of following three manners.

The offset value may be configured by a network device.

The offset value may be preconfigured by the remote terminal.

The offset value may be determined based on a difference between a power level of the relay terminal and a power level of the remote terminal.

Exemplarily, the offset value is identified by offset, offset=max (P_{PowerClass, relay UE}-P_{PowerClass remote UE}, 0), where P_{PowerClass, relay UE} is the power level of the relay terminal and P_{PowerClass remote UE} represents the power level of the remote terminal.

At present, when the relay UE is selected for the remote UE in the disconnected state, only a measurement result for the RSRP of the sidelink is considered, and asymmetric transmission coverage in two directions (uplink and downlink) of the sidelink caused by the difference between the power levels of the UEs at two sides is not considered. In the above solution, the offset value is introduced, and whether the corrected second signal strength is greater than or equal to the access strength threshold is determined. The remote terminal accesses to the relay terminal only in case where the second signal strength is greater than or equal to the access strength threshold, which can ensure normal transmissions on both sides of the remote UE and the relay UE.

In order to further explain the solution in the embodiments of the present disclosure, the method for access control provided by the embodiments of the present disclosure will be explained respectively by five embodiments. In the following embodiments, the reduced capability terminal is also represented as the RedCap terminal or the RedCap UE, and the non-reduced capability terminal is also represented as the non-RedCap terminal or the non-RedCap UE, the relay terminal is also represented as the Relay UE, and the remote terminal is also represented as the remote UE, and the cell barred indication is identified as cellBarred indication.

### First Embodiment

For the RedCap terminal, a cellBarred indication is used for controlling whether the RedCap terminal is allowed to access to the network through two access manners of the Uu interface and the PC5 interface.

Exemplarily, FIG. 4 is a schematic diagram corresponding to the first embodiment, and the specific implementation is described as follows.

In a system message (e.g. SIB1), the network device broadcasts a first cell barred (i.e., represented by the cellBarred) indication for the RedCap terminal. The first cellBarred indication indicates whether the access of the RedCap UE is barred in the current cell.

The first cellBarred indication for the RedCap terminal may be configured separately for different types of RedCap terminal. For example, different cellBarred indications are used for separately controlling the terminals having different numbers of the receiving antennas.

The first cellBarred indication for the RedCap terminal is used to simultaneously control whether the RedCap terminal is allowed to access to the network device in following two access manners.

In a first manner, the RedCap terminal accesses to the network device through the Uu interface.

In a second manner, the RedCap terminal accesses to the relay terminal (also represented as the Relay UE) through the PC5 interface.

The Relay UE determines, according to a terminal type of the relay UE and by combining with the first cellBarred indication corresponding to the terminal type, to access the network device if the Relay UE is a RedCap UE and the first cellBarred indication of the network device for the RedCap terminal indicates that the access of the RedCap terminal is allowed in the current cell.

The Relay UE sends the second cell barred (i.e., represented by cellBarred) indication for the RedCap UE in a broadcast manner by the specific method as follows.

In a first method, the Relay UE directly forwards the first cellBarred indication for the RedCap UE from the network device. That is to say, the Relay UE cannot change the value of the first cellBarred indication for the RedCap UE broadcast by the network device.

In a second method, the Relay UE determines a value of the second cellBarred indication broadcast by the Relay UE according to the first cellBarred indication for the RedCap UE from the network device and by combining with a situation of the relay UE.

Optionally, if the first cellBarred indication for the RedCap UE broadcast by the network device indicates that the access of the RedCap terminal is barred in the current cell, the second cellBarred indication for the RedCap UE broadcast by the Relay UE indicates that the access of the RedCap terminal is barred in the current cell.

Optionally, if the first cellBarred indication for the RedCap UE broadcast by the network device indicates that the access of the RedCap terminal is allowed in the current cell, the Relay UE may determine that the broadcast second cellBarred indication for the RedCap UE indicates that the access of the RedCap terminal is allowed in the current cell or the access of the RedCap terminal is barred in the current cell according to the situation thereof.

The remote UE may make the following determination according to a terminal type and by combining with the second cellBarred indication, if the remote UE is the RedCap UE.

In response to the second cellBarred indication for the RedCap terminal from the Relay UE indicates that the access of the RedCap terminal is allowed in the current cell, the remote UE may connect to the Relay UE through the PC5 and then accesses to the network device.

In response to the second cellBarred indication for the RedCap terminal from the Relay UE indicates that the access of the RedCap terminal is barred in the current cell, the remote UE may not connect to the Relay UE through the PC5 and access to the network device.

According to the solution in the first embodiment, a unified control is provided for the two access manners that the RedCap UE accesses the network through the Uu interface and the PC5, without additional Uu signaling parameter.

### Second Embodiment

For the RedCap terminal, one cellBarred indication is used for controlling whether the RedCap terminal is allowed to access to the network through the Uu interface, and another cellBarred indication is used for controlling whether the RedCap terminal is allowed to access to the network through the PC5 interface.

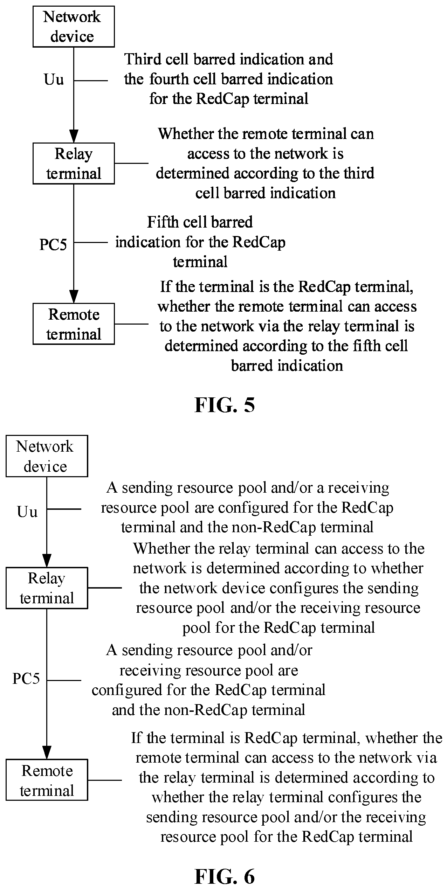

Exemplarily, FIG. 5 is a schematic diagram corresponding to the second embodiment, and the specific implementation is described as follows.

In a system message (e.g. SIB1 or other SIBs), the network broadcasts a third cellBarred indication for the RedCap terminal and a fourth cellBarred indication for the RedCap terminal. The third cellBarred indication indicates whether the current cell allows the RedCap UE to access to the network through the Uu interface. The fourth cellBarred indication indicates whether the current cell allows the RedCap UE to access to the Relay UE through the PC5 interface and then access to the network.

The third cellBarred indication for the RedCap terminal and the fourth cellBarred indication for the RedCap terminal may be configured separately for different types of RedCap terminal. For example, different cellBarred indications are used for controlling terminals having different numbers of receiving antennas.

The Relay UE determines according to a terminal type and by combining with the third cellBarred indication. If the Relay UE is the RedCap UE and the third cellBarred indication for the RedCap terminal from the network indicates that the access of the RedCap terminal is allowed in the current cell, the Relay UE may access to the network.

The Relay UE sends a fifth cellBarred indication for the RedCap UE through a broadcast manner with following methods.

In the first method, the Relay UE directly forwards the fourth cellBarred indication for the RedCap UE from the network. That is to say, the Relay UE cannot change a value of the fourth cellBarred indication for the RedCap UE broadcast by the network.

In the second method, the Relay UE determines a value of the fifth cellBarred indication broadcast by the Relay UE according to the fourth cellBarred indication for the RedCap UE from the network and by combining with a situation thereof.

Optionally, if the fourth cellBarred indication for the RedCap UE broadcast by the network indicates that the access of the RedCap terminal is barred in the current cell, the fifth cellBarred indication for the RedCap UE broadcast by the Relay UE indicates that the access of the RedCap terminal is barred in the current cell.

Optionally, if the fourth cellBarred indication for the RedCap UE broadcast by the network indicates that the access of the RedCap terminal is allowed in the current cell, the Relay UE may determine that the broadcast fifth cellBarred indication for the RedCap UE indicates that the access of the RedCap terminal is allowed in the current cell or the access of the RedCap terminal is barred in the current cell according to a situation thereof.

The remote UE makes the following determination according to a terminal type and by combining with the fifth cellBarred indication, if the remote UE is the RedCap UE.

In response to the fifth cellBarred indication for the RedCap terminal from the Relay UE indicates that the access of the RedCap terminal is allowed in the current cell, the remote UE may connect to the Relay UE through the PC5 and thus access to the network.

In response to the fifth cellBarred indication for the RedCap terminal from the Relay UE indicates that the access of the RedCap terminal is barred in the current cell, the remote UE may not connect to the Relay UE through the PC5 and not access to the network device.

According to the solution in the second embodiment, more flexible control can be realized for the two access network manners that the RedCap UE accesses the network through the Uu interface and the PCS, without additional Uu signaling parameters.

### Third Embodiment

For the case where the UE accesses to the Relay UE through the PCS, the network configures different sending resource pools and/or receiving resource pools for the RedCap terminal and the non-RedCap terminal in a broadcast manner. The RedCap terminal determines whether the current cell allows the RedCap UE to access to the Relay UE through the PC5 interface and thus access to the network according to whether the sending resource pool and/or receiving resource pool is configured for the RedCap terminal.

Exemplary, FIG. 6 is a schematic diagram corresponding to the third embodiment, and the specific implementation is described as follows.

The network configures the sending resource pool and/or the receiving resource pool of the PC5 in the broadcast manner, and the sending resource pool and/or the receiving resource pool are separately configured for the RedCap terminal and the non-RedCap terminal.

The sending resource pool and/or the receiving resource pool configured for the RedCap terminal does not overlap with that configured for the non-RedCap terminal in the time domain or the frequency domain.

Furthermore, the sending resource pool and/or the receiving resource pool for the RedCap terminal may be configured separately for different types of RedCap terminal, and the types of RedCap terminal may be distinguished by one or more of the following manners: the RedCap terminal is a high-end RedCap UE or a low-end RedCap UE; the RedCap terminal is a RedCap UE in FR1 or a RedCap UE in FR2; a scenario of the RedCap terminal, for example, industrial wireless sensors, video surveillance devices, wearables; the number of Rx/Tx antennas of the UE; and a maximum bandwidth of the UE, for example, the RedCap UE in FR1 has a maximum bandwidth of 20 MHz or 10 MHz.

Whether the RedCap UE is determined as the high-end RedCap UE or the low-end RedCap UE may be determined according to the transmission rate, the number of Rx/Tx antennas, etc. For example, the RedCap UE may be determined as the high-end RedCap UE when the transmission rate is high and the number of Rx/Tx antennas is large, and the RedCap UE may be determined as the low-end RedCap UE when the transmission rate is low and the number of Rx/Tx antennas is small.

The Relay UE makes a determination according to a terminal type thereof and by combining with the resource pool configuration information. If the Relay UE is the RedCap UE and the network does not broadcast the sending resource pool and/or receiving resource pool for the RedCap terminal, the UE cannot serve as a relay UE to providing services for other remote UEs.

The Relay UE sends the sending resource pool configuration information and/or the receiving resource pool configuration information in the broadcast manner with the specific method as follows.

In a first method, the Relay UE directly forwards the sending resource pool configuration information and/or the receiving resource pool configuration information broadcast by the network. That is to say, the Relay UE cannot change the sending resource pool configuration information and/or the receiving resource pool configuration information broadcast by the network.

In a second method, the Relay UE determines sending resource pool configuration information and/or receiving resource pool configuration information broadcast by the Relay UE according to the sending resource pool configuration information and/or the receiving resource pool configuration information and by combining with a situation thereof.

Optionally, if the sending resource pool configuration information and/or the receiving resource pool configuration information broadcast by the network contains no sending resource pool configuration information and/or no receiving resource pool configuration information for the RedCap UE, the sending resource pool configuration information and/or the receiving resource pool configuration information broadcast by the Relay UE also contains no sending resource pool configuration information and/or no receiving resource pool configuration information for the RedCap UE.

Optionally, if the sending resource pool configuration information and/or the receiving resource pool configuration information broadcast by the network contains the sending resource pool configuration information and/or the receiving resource pool configuration information for the RedCap UE, the Relay UE may determine whether the sending resource pool configuration information and/or the receiving resource pool configuration information broadcast by the relay UE contains the sending resource pool configuration information and/or the receiving resource pool configuration information for the RedCap UE according to a situation thereof.

The remote UE makes the following determination according to a terminal type and by combining the sending resource pool configuration information and/or the receiving resource pool configuration information broadcast by the Relay UE, if the remote UE is the RedCap UE.

In response to the sending resource pool configuration information and/or the receiving resource pool configuration information from the Relay UE containing the sending resource pool configuration information and/or the receiving resource pool configuration information for the RedCap UE, the remote UE may connect to the Relay UE through the PC5 and thus access to the network.

In response to the sending resource pool configuration information and/or the receiving resource pool configuration information from the Relay UE containing no sending resource pool configuration information and/or no receiving resource pool configuration information for the RedCap UE, the remote UE cannot connect to the Relay UE through the PC5 and thus cannot access to the network.

The solution in the third embodiment provides an implicit access control manner for the accessing of the RedCap UE through the PCS, i.e., implicitly indicating through the resource pool indication.

### Fourth Embodiment

For the case where the UE accesses to the Relay UE through the PCS, the network configures different sending resource pools and/or receiving resource pools for the RedCap terminal and the non-RedCap terminal in the broadcast manner. The Relay UE sends a sixth cellBarred indication for the RedCap UE in the broadcast manner. The Remote RedCap terminal determines whether the current cell allows the RedCap UE to access to the Relay UE through the PC5 interface and thus access to the network according to the sixth cellBarred indication.

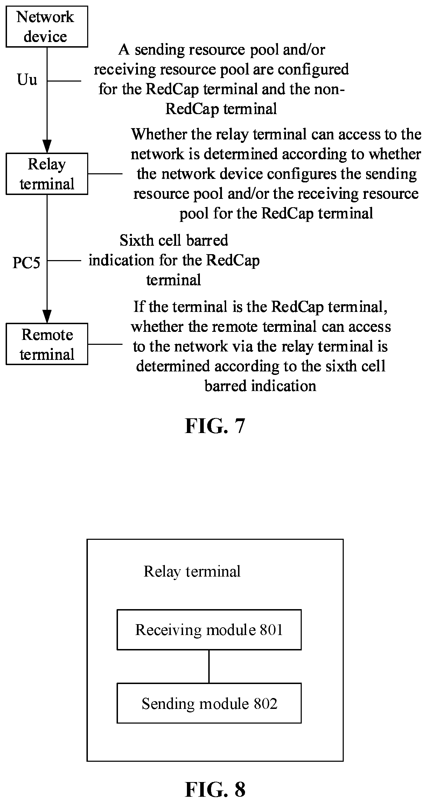

Exemplary, FIG. 7 is a schematic diagram corresponding to the third embodiment, and the specific implementation is described as follows.

The network configures the sending resource pool and/or the receiving resource pool of the PC5 in the broadcast manner, and the sending resource pool and/or the receiving resource pool are separately configured for the RedCap terminal and the non-RedCap terminal.

The sending resource pools and/or the receiving resource pools configured for the RedCap terminal does not overlap with that of the non-RedCap terminal in the time domain or the frequency domain.

Furthermore, the sending resource pool and/or the receiving resource pool for the RedCap terminal may be configured separately for different types of RedCap terminal, and the types of RedCap terminal may be distinguished by one or more of the following manners: a high-end RedCap UE or a low-end RedCap UE, or the RedCap UE in FR1 or the RedCap UE in FR2; a scenario of RedCap terminal, for example, industrial wireless sensors, video surveillance devices, wearables; the numbers of the Rx/Tx antennas of UE; and a maximum bandwidth of the UE, for example, the maximum bandwidth of the RedCap UE in FR1 is 20 MHz or 10 MHz.

The Relay UE makes the following determination according to a terminal type and by combining with the resource pool configuration information: if the Relay UE is the RedCap UE and the network does not broadcast the sending resource pool and/or receiving resource pool for the RedCap terminal, the UE cannot serve as the Relay UE to provide services for other remote UEs.

The Relay UE sends a sixth cellBarred indication for the RedCap UE in the broadcast manner with the specific method as follows.

In a first method, the Relay UE determines the sixth cellBarred indication for the RedCap UE only according to the sending resource pool configuration information and/or the receiving resource pool configuration information broadcast by the network.

If the sending resource pool configuration information and/or the receiving resource pool configuration information broadcast by the network contains no sending resource pool configuration information and/or no receiving resource pool configuration information for the RedCap UE, the sixth cellBarred indication for the RedCap UE broadcast by the Relay UE indicates that the access of the RedCap terminal is barred in the current cell.

If the sending resource pool configuration information and/or the receiving resource pool configuration information broadcast by the network contains the sending resource pool configuration information and/or the receiving resource pool configuration information for the RedCap UE, the sixth cellBarred indication for the RedCap UE broadcast by the Relay UE indicates that the access of the RedCap terminal is allowed in the current cell.

In a second method, the Relay UE determines a value of the sixth cellBarred indication broadcast by the Relay UE according to the sending resource pool configuration information and/or the receiving resource pool configuration information broadcast by the network and by combining with a situation of the Relay UE. The method second is described as follows.

If the sending resource pool configuration information and/or the receiving resource pool configuration information broadcast by the network contains no sending resource pool configuration information and/or no receiving resource pool configuration information for the RedCap UE, the sixth cellBarred indication for the RedCap UE broadcast by the Relay UE indicates that the access of the RedCap terminal is barred in the current cell.

If the sending resource pool configuration information and/or the receiving resource pool configuration information broadcast by the network contains sending resource pool configuration information and/or no receiving resource pool configuration information for the RedCap UE, the Relay UE may determine whether the sixth cellBarred indication for the RedCap UE broadcast by the Relay UE indicates that the access of the RedCap terminal is allowed in the current cell or the access of the RedCap terminal is barred in the current cell according to a situation of the Relay UE.

The remote UE makes the following determination according to a terminal type and by combining with the sixth cellBarred indication, if the remote UE is a RedCap UE.

In response to the sixth cellBarred indication for the RedCap terminal from the Relay UE indicates that the access of the RedCap terminal is allowed in the current cell, the remote UE may connect to the Relay UE through the PC5 and thus access to the network.

In response to the sixth cellBarred indication for the RedCap terminal from the Relay UE indicates that the access of the RedCap terminal is barred in the current cell, the remote UE cannot connect to the Relay UE through the PC5 and thus cannot access to the network.

The solution in the fourth embodiment provides a combination of implicit and explicit access control manner. It will be understood that the first cellBarred indication, the second cellBarred indication, the third cellBarred indication, the fourth cellBarred indication, and the fifth cellBarred indication in the above-described first embodiment to the fourth embodiment are described to distinguish the cellBarred indications and is not intended to limit the sequence of the cellBarred indications.

### Fifth Embodiment

A remote UE in a disconnected state considers a power level when selecting a serving Relay UE.

The Remote UE measures a reference signal from the Relay UE to obtain signal strength of the first reference signal (reference signal received power RSRP) obtained by the Remote UE according to the SL measurement result, and corrects the first RSRP to obtain the second RSRP

The reference signal may be a discovery signal or a data signal.

The second RSRP=the first RSRP-offset. The method for determining the offset may include but is not limited to following methods.

The offset value may be configured by a network.

The offset value may be preconfigured by the remote UE.

The offset value may be determined by the remote UE based on a difference between the power level of the remote UE and the power level of the Relay UE: offset=max (P_{PowerClass, relay UE}-P_{PowerClass remote UE}, 0), where P_{PowerClass, relay UE} is the power level of the relay terminal and P_{PowerClass remote UE} represents the power level of the remote terminal.

The remote UE determines, according to the corrected RSRP, that the remote UE selects the Relay UE as a serving relay if the second RSRP obtained by correcting is greater than a RSRP threshold.

At present, when the relay UE is selected for the remote UE in the disconnected state, only a measurement result for the RSRP of the sidelink is considered, and asymmetric transmission coverage in two directions (uplink and downlink) of the sidelink caused by the difference between the power levels of the UEs at two sides is not considered. The solution of the fifth embodiment can ensure that the relay terminal which can realize normal bidirectional transmission is selected for access.

As shown in FIG. 8, the embodiment of the present disclosure provides a relay terminal including a receiving module 801 and a sending module 802.

The receiving module 801 is configured to receive first information sent by a network device. The first information is used for barring access of a first terminal, or the first information is used for allowing the access of the first terminal.

The sending module 802 is configured to broadcast second information to a remote terminal. The second information is determined according to the first information.

Optionally, the first information includes at least one cell barred indication.

The at least one cell barred indication in the first information is used for barring the access of the first terminal, or the at least one cell barred indication in the first information is used for allowing the access of the first terminal.

Optionally, the at least one cell barred indication in the first information corresponds to at least one cell.

Optionally, for each cell of the at least one cell, different cell barred indications in at least one cell barred indication corresponding to the cell correspond to first terminals of different terminal types.

Optionally, in response to the first information including at least one resource pool indication for the first terminal, the first information is used for allowing the access of the first terminal.

In response to the first information including no at least one resource pool indication for the first terminal, the first information is used for barring the access of the first terminal.

Optionally, the at least one resource pool indication in the first information corresponds to at least one cell.

Optionally, for each cell of the at least one cell, different cell barred indications in at least one cell barred indication corresponding to the cell correspond to first terminals of different terminal types.

Optionally, resource pools corresponding to different terminal types do not overlap with each other in at least one of time domain or frequency domain.

Optionally, the first terminal includes a reduced capability (RedCap) terminal and a non-RedCap terminal.

A resource pool for the RedCap terminal does not overlap with a resource pool for the non-RedCap terminal in at least one of the time domain or the frequency domain.

Optionally, where the second information includes at least one cell barred indication.

The cell barred indication in the second information is used for barring the access of the first terminal, or the cell barred indication in the second information is used for allowing the access of the first terminal.

Optionally, the second information is the first information, and broadcasting the second information means forwarding the first information.

Optionally, the operation that the second information is determined according to the first information includes the following operations.

In response to a cell barred indication in the first information being used for barring the access of the first terminal, a cell barred indication in the second information is used for barring the access of the first terminal.

In response to the cell barred indication in the first information being used for allowing the access of the first terminal, the cell barred indication in the second information is used for barring the access of the first terminal, or the cell barred indication in the second information is used for allowing the access of the first terminal.

In response to the first information including at least one resource pool indication for the first terminal, the at least one cell barred indication is used for allowing the access of the first terminal.

In response to the first information including no at least one resource pool indication for the first terminal, the at least one cell barred indication is used for barring the access of the first terminal.

Optionally, the operation that the second information is determined according to the first information includes followings operations.

In response to the first information including at least one resource pool indication for the first terminal, the second information includes at least one resource pool indication for the first terminal, or the second information includes no at least one resource pool indication for the first terminal.

In response to the first information including no at least one resource pool indication for the first terminal, the second information includes no at least one resource pool indication for the first terminal.

In response to the cell barred indication in the first information being used for barring the access of the first terminal, the second information includes no at least one resource pool indication for the first terminal.

In response to the cell barred indication in the first information being used for allowing the access of the first terminal, the second information includes the at least one resource pool indication for the first terminal.

Optionally, the first terminal is at least one of a reduced capability (RedCap) terminal or a non-RedCap terminal.

Optionally, the terminal types are distinguished by at least one of following information: a transmission rate, the number of receiving antennas, the number of transmitting antennas, a maximum bandwidth, a supported frequency range, or a terminal scenario.

Optionally, the first information is used for controlling at least one of following access manners of the first terminal: accessing to a network through an Uu interface; accessing to the relay terminal through a proximity communication (PC5) interface.

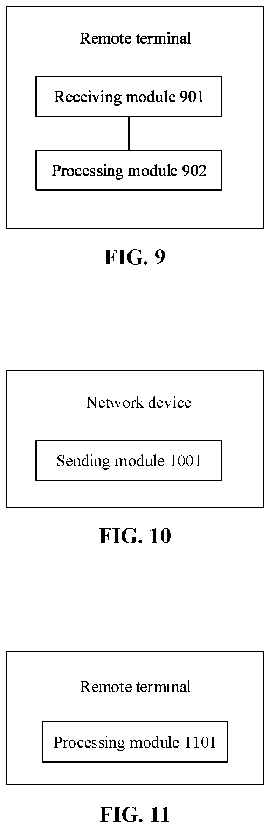

As shown in FIG. 9, a remote terminal is provided. The remote terminal includes a receiving module 901.

The receiving module 901 is configured to receive second information broadcast by a relay terminal, where the second information is used for barring access of a first terminal, or the second information is used for allowing the access of the first terminal.

Optionally, the second information includes at least one cell barred indication.

The at least one cell barred indication in the second information is used for barring the access of the first terminal, or the at least one cell barred indication in the second information is used for allowing the access of the first terminal.

Optionally, the remote terminal also includes a processing module 902.

The processing module 902 is configured to perform network access according to the cell barred indication in the second information in response to the remote terminal being the first terminal.

Optionally, the at least one cell barred indication in the second information corresponds to at least one cell.

Optionally, for each cell of the at least one cell, different cell barred indications in at least one cell barred indication corresponding to the cell correspond to first terminals of different terminal types.

Optionally, the remote terminal also includes: a processing module 902.

The processing module 902 is configured to perform network access according to a target cell barred indication in response to the remote terminal being the first terminal and a terminal type of the remote terminal is a first type.

The target cell barred indication is an indication corresponding to the first type among at least one cell barred indication.

Optionally, in response to the second information including at least one resource pool indication for the first terminal, the second information is used for allowing the access of the first terminal.

In response to the second information including no at least one resource pool indication for the first terminal, the second information is used for barring the access of the first terminal.

Optional, the remote terminal also includes a processing module.

The processing module 902 configured to: access to a network in response to the remote terminal being the first terminal and receiving the at least one resource pool indication; not access to the network in response to the remote terminal being the first terminal and receiving no at least one resource pool indication.

Optionally, the at least one resource pool indication in the second information corresponds to at least one cell.

Optionally, for each cell of the at least one cell, different resource pool indications in at least one resource pool indication corresponding to the cell correspond to first terminals of different terminal types.

Optionally, resource pools corresponding to different terminal types do not overlap with each other in at least one of time domain or frequency domain.

Optionally, the first terminal includes a reduced capability (RedCap) terminal and a non-RedCap terminal.

A resource pool for the RedCap terminal does not overlap with a resource pool for the non-RedCap terminal in at least one of the time domain or the frequency domain.

Optionally, the first terminal is at least one of a reduced capability (RedCap) terminal or a non-RedCap terminal.

Optionally, the terminal types are distinguished by at least one of following information: a transmission rate, the number of receiving antennas, the number of transmitting antennas, a maximum bandwidth, a supported frequency range, or a terminal scenario.

Optionally, the first information is used for controlling at least one of following access manners of the first terminal: accessing to a network through an Uu interface; and accessing to the relay terminal through a proximity communication (PC5) interface.

Optionally, in response to the remote terminal being the first terminal and the second information being used for allowing the access of the first terminal, a first signal strength is corrected according to an offset value to obtain a second signal strength. The first signal strength is received reference signal strength of a relay terminal.

In response to the second signal strength being greater than or equal to an access strength threshold, the remote terminal accesses to the relay terminal.

Optionally, the offset value is determined in at least one of the following manners.

The offset value is configured by a network device.

The offset value is preconfigured by the remote terminal.

The offset value is determined based on a difference between a power level of the relay terminal and a power level of the remote terminal.

As shown in FIG. 10, a network device including a sending module 1001 is provided.

The sending module 1001 is configured to send first information to the relay terminal. The first information is used for barring access of the first terminal, or the first information is used for allowing the access of the first terminal.

Optionally, the first information includes at least one cell barred indication.

The at least one cell barred indication in the first information is used for barring the access of the first terminal, or the at least one cell barred indication in the first information is used for allowing the access of the first terminal.

Optionally, the at least one cell barred indication in the first information corresponds to at least one cell.

Optionally, for each cell of the at least one cell, different cell barred indications in at least one cell barred indication corresponding to the cell correspond to first terminals of different terminal types.

Optionally, in response to the first information including at least one resource pool indication for the first terminal, the first information is used for allowing the access of the first terminal.

In response to the first information including no at least one resource pool indication for the first terminal, the first information is used for barring the access of the first terminal.

Optionally, the at least one resource pool indication in the first information corresponds to at least one cell.

Optionally, for each cell of the at least one cell, different resource pool indications in at least one resource pool indication corresponding to the cell correspond to first terminals of different terminal types.

Optionally, resource pools corresponding to different terminal types do not overlap with each other in at least one of time domain or frequency domain.

Optionally, the first terminal includes: a reduced capability (RedCap) terminal and a non-RedCap terminal.

A resource pool for the RedCap terminal does not overlap with a resource pool for the non-RedCap terminal in at least one of the time domain or the frequency domain.

Optionally, the first terminal is at least one of a reduced capability (RedCap) terminal or a non-RedCap terminal.

Optionally, the terminal types are distinguished by at least one of following information: a transmission rate, the number of receiving antennas, the number of transmitting antennas, a maximum bandwidth, a supported frequency range, or a terminal scenario.

Optionally, the first information is used for controlling at least one of following access manners of the first terminal: accessing to a network through a Uu interface; and accessing to the relay terminal through a proximity communication (PC5) interface.

As shown in FIG. 11, a remote terminal including a processing module 1101 is provided.

The processing module 1101 is configured to correct a first signal strength according to an offset value to obtain a second signal strength. The first signal strength is a received reference signal strength of a relay terminal.

The processing module 1101 is configured to access to the relay terminal in response to the second signal strength being greater than an access strength threshold.

Optionally, the offset value is determined in at least one of the following manners.

The offset value is configured by a network device.

The offset value is preconfigured by the remote terminal.

The offset value is determined based on a difference between a power level of the relay terminal and a power level of the remote terminal.

Optionally, the embodiment of the present disclosure also provides a terminal device including: a memory configured to store executable program codes; and a processor coupled to the memory.

The processor calls the executable program codes stored in the memory to perform the method for access control performed by the relay terminal in the embodiment of the present disclosure or the method for access control performed by the remote terminal in the embodiment of the present disclosure.

The embodiment of the present disclosure also provides a network device including configured to store executable program codes; and a processor coupled to the memory.

The processor calls the executable program codes stored in the memory to perform the method for access control performed by the network device in the embodiment of the present disclosure.

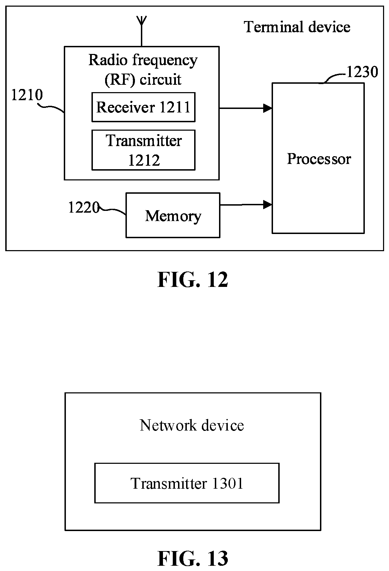

FIG. 12 is a schematic diagram of a hardware structure of a terminal device according to an embodiment of the present disclosure. The terminal device may include a radio frequency (RF) circuit 1210, a memory 1220, a processor 1230 and the like. The radio frequency circuit 1210 includes a receiver 1211 and a transmitter 1212. It will be understood by those skilled in the art that the structure of the terminal device shown in FIG. 12 does not constitute a limitation of the terminal device and the structure of the terminal device may include more or fewer components than the illustrated components, or a combination of certain components, or component arrangements different from those shown in FIG. 12.

The RF circuit 1210 may be configured to receive and send massages or receive and send signals during talking. In particular, the downlink information from the base station is received and then processed by the processor 1230. In addition, the uplink data is sent to the base station. Generally, the RF circuit 1210 includes but is not limited to an antenna, at least one amplifier, a transceiver, a coupler, a Low Noise Amplifier (LNA), a duplexer and the like. In addition, the RF circuit 1210 may also communicate with a network and other devices through wireless communication. The wireless communication may use any communication standard or communication protocol including but not limited to the Global System Of Mobile Communication (GSM), the General Packet Radio Service (GPRS), the Code Division Multiple Access (CDMA), the Wideband Code Division Multiple Access (WCDMA), the Long Term Evolution (LTE), the E-mail, the Short Messaging Service (SMS), etc.

The memory 1220 may be configured to store software programs and modules. The processor 1230 performs various functional applications and data processing of the terminal device by running the software programs and modules stored in the memory 1220. The memory 1220 may include a storage program area and a storage data area. The storage program area may store an operating system, an application required for at least one function (e.g. a sound playback function, an image playback function etc.) and the like. The storage data area may store data (such as audio data, telephone book, etc.) created according to the usage of the terminal device. In addition, the memory 1220 may include high-speed random access memory and may also include non-volatile memory, such as, at least one disk memory device, a flash memory device, or other volatile solid-state memory device.

The processor 1230 is a control center that connects various components of the entire terminal device by various interfaces and lines, and performs various functions of the terminal device and processes data by running or executing software programs and/or modules stored in the memory 1220 and calling data stored in the memory 1220, thereby monitoring the terminal device as a whole. Optionally, the processor 1230 may include one or more processing units. Preferably, the processor 1230 may integrate an application processor and a modem processor. The application processor processes operating systems, user interfaces, applications, and the like, and the modem processor processes wireless communications. It will be appreciated that the modem processor may also not be integrated into the processor 1230.
(1) The terminal device is a relay terminal.

The receiver 1211 is configured to receive first information sent by the network device. The first information is used for barring access of the first terminal, or the first information is used for allowing the access of the first terminal.

The transmitter 1212 is configured to broadcast the second information to the remote terminal. The second information is determined according to the first information.

Optionally, the first information includes at least one cell barred indication.

The at least one cell barred indication in the first information is used for barring the access of the first terminal, or the at least one cell barred indication in the first information is used for allowing the access of the first terminal.

Optionally, the at least one cell barred indication in the first information corresponds to at least one cell.

Optionally, for each cell of the at least one cell, different cell barred indications in at least one cell barred indication corresponding to the cell correspond to first terminals of different terminal types.

Optionally, in response to the first information including at least one resource pool indication for the first terminal, the first information is used for allowing the access of the first terminal.

In response to the first information including no at least one resource pool indication for the first terminal, the first information is used for barring the access of the first terminal.

Optionally, the at least one resource pool indication in the first information corresponds to at least one cell.

Optionally, for each cell of the at least one cell, different cell barred indications in at least one cell barred indication corresponding to the cell correspond to first terminals of different terminal types.

Optionally, resource pools corresponding to different terminal types do not overlap with each other in at least one of time domain or frequency domain.

Optionally, the first terminal includes: a reduced capability (RedCap) terminal and a non-RedCap terminal.

A resource pool for the RedCap terminal does not overlap with a resource pool for the non-RedCap terminal in at least one of the time domain or the frequency domain.

Optionally, where the second information includes at least one cell barred indication.

The cell barred indication in the second information is used for barring the access of the first terminal, or the cell barred indication in the second information is used for allowing the access of the first terminal.

Optionally, the operation that the second information is determined according to the first information includes the following operations.

In response to a cell barred indication in the first information being used for barring the access of the first terminal, a cell barred indication in the second information is used for barring the access of the first terminal.

In response to the cell barred indication in the first information being used for allowing the access of the first terminal, the cell barred indication in the second information is used for barring the access of the first terminal, or the cell barred indication in the second information is used for allowing the access of the first terminal.

In response to the first information including at least one resource pool indication for the first terminal, the at least one cell barred indication is used for allowing the access of the first terminal.

In response to the first information including no at least one resource pool indication for the first terminal, the at least one cell barred indication is used for barring the access of the first terminal.

Optionally, the operation that the second information is determined according to the first information includes followings operations.

In response to the first information including at least one resource pool indication for the first terminal, the second information includes at least one resource pool indication for the first terminal, or the second information includes no at least one resource pool indication for the first terminal.

In response to the first information including no at least one resource pool indication for the first terminal, the second information includes no at least one resource pool indication for the first terminal.

In response to the cell barred indication in the first information being used for barring the access of the first terminal, the second information includes no at least one resource pool indication for the first terminal.

In response to the cell barred indication in the first information being used for allowing the access of the first terminal, the second information includes the at least one resource pool indication for the first terminal.

Optionally, the first terminal is at least one of a reduced capability (RedCap) terminal or a non-RedCap terminal.

Optionally, the terminal types are distinguished by at least one of following information: a transmission rate, the number of receiving antennas, the number of transmitting antennas, a maximum bandwidth, a supported frequency range, or a terminal scenario.

Optionally, the first information is used for controlling at least one of following access manners of the first terminal: accessing to a network through an Uu interface; and accessing to the relay terminal through a proximity communication (PC5) interface

(2) The terminal device is a remote terminal.

The processor 1230 is configured to correct a first signal strength according to an offset value to obtain a second signal strength. The first signal strength is a received reference signal strength of a relay terminal.

The processor 1230 is configured to access to the relay terminal in response to the second signal strength being greater than an access strength threshold.

Optionally, the offset value is determined in at least one of the following manners.

The offset value is configured by a network device.

The offset value is preconfigured by the remote terminal.

The offset value is determined based on a difference between a power level of the relay terminal and a power level of the remote terminal.

(3) The terminal device is a remote terminal.

The receiver 1211 is configured to receive second information broadcast by a relay terminal, where the second information is used for barring access of a first terminal, or the second information is used for allowing the access of the first terminal.

Optionally, the second information includes at least one cell barred indication.

The at least one cell barred indication in the second information is used for barring the access of the first terminal, or the at least one cell barred indication in the second information is used for allowing the access of the first terminal.

Optionally, the remote terminal also includes a processing module.

The processing module is configured to perform network access according to the cell barred indication in the second information in response to the remote terminal being the first terminal.

Optionally, the at least one cell barred indication in the second information corresponds to at least one cell.

Optionally, for each cell of the at least one cell, different cell barred indications in at least one cell barred indication corresponding to the cell correspond to first terminals of different terminal types.

Optionally, the remote terminal also includes a processor 1230.

The processor 1230 is configured to perform network access according to a target cell barred indication in response to the remote terminal being the first terminal and a terminal type of the remote terminal being a first type.

The target cell barred indication is an indication corresponding to the first type among at least one cell barred indication.

Optionally, in response to the second information including at least one resource pool indication for the first terminal, the second information is used for allowing the access of the first terminal.

In response to the second information including no at least one resource pool indication for the first terminal, the second information is used for barring the access of the first terminal.

Optional, the remote terminal also includes the processor 902.

The processor 1230 is configured to: access to a network in response to the remote terminal being the first terminal and receiving the at least one resource pool indication; not access to the network in response to the remote terminal being the first terminal and receiving no at least one resource pool indication.

Optionally, the at least one resource pool indication in the second information corresponds to at least one cell.

Optionally, for each cell of the at least one cell, different resource pool indications in at least one resource pool indication corresponding to the cell correspond to first terminals of different terminal types.

Optionally, resource pools corresponding to different terminal types do not overlap with each other in at least one of time domain or frequency domain.

Optionally, the first terminal includes: a reduced capability (RedCap) terminal and a non-RedCap terminal.

A resource pool for the RedCap terminal does not overlap with a resource pool for the non-RedCap terminal in at least one of the time domain or the frequency domain.

Optionally, the first terminal is at least one of a reduced capability (RedCap) terminal or a non-RedCap terminal.

Optionally, the terminal types are distinguished by at least one of following information: a transmission rate, the number of receiving antennas, the number of transmitting antennas, a maximum bandwidth, a supported frequency range, or a terminal scenario.

Optionally, the first information is used for controlling at least one of following access manners of the first terminal: accessing to a network through an Uu interface; and accessing to the relay terminal through a proximity communication (PC5) interface.

Optionally, in response to the remote terminal being the first terminal and the second information being used for allowing the access of the first terminal, a first signal strength is corrected according to an offset value to obtain a second signal strength. The first signal strength is a received reference signal strength of a relay terminal.

In response to the second signal strength being greater than or equal to an access strength threshold, the remote terminal accesses to the relay terminal.

Optionally, the offset value is determined in at least one of the following manners.

The offset value is configured by a network device.

The offset value is preconfigured by the remote terminal.

The offset value is determined based on a difference between a power level of the relay terminal and a power level of the remote terminal.

Exemplarily, as shown in FIG. 13, the network device in the embodiment of the present disclosure may be a base station including a transmitter 1301.

The transmitter 1301 is configured to send first information to the relay terminal. The first information is used for barring access of the first terminal, or the first information is used for allowing the access of the first terminal.

Optionally, the first information includes at least one cell barred indication.

The at least one cell barred indication in the first information is used for barring the access of the first terminal, or the at least one cell barred indication in the first information is used for allowing the access of the first terminal.

Optionally, the at least one cell barred indication in the first information corresponds to at least one cell.

Optionally, for each cell of the at least one cell, different cell barred indications in at least one cell barred indication corresponding to the cell correspond to first terminals of different terminal types.

Optionally, in response to the first information including at least one resource pool indication for the first terminal, the first information is used for allowing the access of the first terminal.

In response to the first information including no at least one resource pool indication for the first terminal, the first information is used for barring the access of the first terminal.

Optionally, the at least one resource pool indication in the first information corresponds to at least one cell.

Optionally, for each cell of the at least one cell, different resource pool indications in at least one resource pool indication corresponding to the cell correspond to first terminals of different terminal types.

Optionally, resource pools corresponding to different terminal types do not overlap with each other in at least one of time domain or frequency domain.

Optionally, the first terminal includes a reduced capability (RedCap) terminal and a non-RedCap terminal.

A resource pool for the RedCap terminal does not overlap with a resource pool for the non-RedCap terminal in at least one of the time domain or the frequency domain.

Optionally, the first terminal is at least one of a reduced capability (RedCap) terminal or a non-RedCap terminal.

Optionally, the terminal types are distinguished by at least one of following information: a transmission rate, the number of receiving antennas, the number of transmitting antennas, a maximum bandwidth, a supported frequency range, or a terminal scenario.

Optionally, the first information is used for controlling at least one of following access manners of the first terminal: accessing to a network through an Uu interface; and accessing to the relay terminal through a proximity communication (PC5) interface

The embodiment of the present disclosure also provides a computer-readable storage medium including: a computer instruction that, when executed on the computer, causes the processor to perform various processes related to the relay terminal of the above method embodiments.

The embodiment of the present disclosure also provides a computer-readable storage medium including: a computer instruction that, when executed on the computer, causes the processor to perform various processes related to the remote terminal of the above method embodiments.

The embodiment of the present disclosure also provides a computer-readable storage medium including: a computer instruction that, when executed on the computer, causes the processor to perform various processes related to the network device of the above method embodiments.

The embodiment of the present disclosure also provides a computer program product including a computer instruction, when the computer program product is executed on the computer, the processor executes the computer instructions to cause the processor to perform various processes related to the relay terminal of the above method embodiments.

The embodiment of the present disclosure also provides a computer program product including a computer instruction, when the computer program product is executed on the computer, the processor executes the computer instructions to cause the processor to perform various processes related to the remote terminal of the above method embodiments.

The embodiment of the present disclosure also provides a computer program product including a computer instruction, when the computer program product is executed on the computer, the processor executes the computer instructions to cause the processor to perform various processes related to the network device of the above method embodiments.

The embodiment of the present disclosure also provides a chip. The chip is coupled with a memory in a terminal device, and the chip calls program instructions stored in the memory when running, to cause the terminal device to perform various processes related to the relay terminal of the above method embodiments.

The embodiment of the present disclosure also provides a chip. The chip is coupled with a memory in a terminal device, and the chip calls program instructions stored in the memory when running, to cause the terminal device to perform various processes related to the remote terminal of the above method embodiments.

The embodiment of the present disclosure also provides a chip. The chip is coupled with a memory in a network device, and the chip calls program instructions stored in the memory when running, to cause the network device to perform various processes related to the network device of the above method embodiments.

The foregoing embodiments may be implemented in whole or in part by software, hardware, firmware, or any combination thereof. When implemented by software, the embodiments may be implemented in whole or in part in the form of a computer program product. The computer program product includes one or more computer instructions. When the computer program instructions are loaded and executed by a computer, all or part of the processes or functions according to the embodiments of the present disclosure are generated. The computer may be a general-purpose computer, a special-purpose computer, a computer network, or other programmable devices. The computer instructions may be stored in a computer-readable storage medium or transmitted from a computer-readable storage medium to another computer-readable storage medium. For example, the computer instructions may be transmitted from a website site, computer, server, or data center to another website site, computer, server, or data center in a wired (such as a coaxial cable, an optical fiber, and a Digital Subscriber Line (DSL)) or wireless (such as infrared, wireless, and microwave) manner. The computer-readable storage medium may be any available medium that may be accessed by a computer or a data storage device such as a server including one or more available medium integrations and a data center. The available medium may be a magnetic medium (such as a floppy disk, a hard disk, and a magnetic tape), an optical medium (such as a Digital Versatile Disc (DVD)), a semiconductor medium (such as a Solid State Disk (SSD)), or the like.

The terms "first", "second", "third", "fourth", etc. (if present) in the specification, the claims and the drawings of the present disclosure are used for distinguishing similar objects and not necessarily for describing a specific sequence or sequential order. It is to be understood that such used data may be interchangeable under an appropriate circumstance, so that the embodiments of the present disclosure described herein are, for example, capable of being implemented in a sequence other than those illustrated or described herein. Furthermore, the terms "including" and "having" and any variations thereof are intended to cover non-exclusive inclusion. For example, processes, methods, systems, products, or devices that include a series of steps or units is not required to be limited to clearly list the series of steps or units, but may include other steps or units that are not clearly listed or are inherent to such processes, methods, products, or devices.

## Claims

1. A method for access control, applied to a relay terminal, comprising:
receiving first information sent by a network device, wherein the first information is used for barring access of a first terminal, or the first information is used for allowing the access of the first terminal; and
broadcasting second information to a remote terminal, wherein the second information is determined according to the first information.

2. The method of claim 1, wherein the first information comprises at least one cell barred indication,
the at least one cell barred indication in the first information is used for barring the access of the first terminal, or the at least one cell barred indication in the first information is used for allowing the access of the first terminal.

3. The method of claim 2, wherein
the at least one cell barred indication in the first information corresponds to at least one cell.

4. The method of claim 3, wherein
for each of the at least one cell, different cell barred indications in at least one cell barred indication corresponding to the cell correspond to first terminals of different terminal types.

5. The method of claim 1, wherein
in response to the first information comprising at least one resource pool indication for the first terminal, the first information is used for allowing the access of the first terminal; and
in response to the first information comprising no at least one resource pool indication for the first terminal, the first information is used for barring the access of the first terminal.

6. The method of claim 5, wherein
the at least one resource pool indication in the first information corresponds to at least one cell.

7. The method of claim 6, wherein
for each of the at least one cell, different resource pool indications in at least one resource pool indication corresponding to the cell correspond to first terminals of different terminal types.

8. The method of claim 7, wherein
resource pools corresponding to the different terminal types do not overlap with each other in at least one of time domain or frequency domain.

9. The method of any one of claims 5 to 8, wherein the first terminal comprises: a reduced capability (RedCap) terminal and a non-RedCap terminal,
a resource pool for the RedCap terminal does not overlap with a resource pool for the non-RedCap terminal in at least one of the time domain or the frequency domain.

10. The method of any one of claims 1 to 9, wherein the second information comprises at least one cell barred indication,
the cell barred indication in the second information is used for barring the access of the first terminal, or the cell barred indication in the second information is used for allowing the access of the first terminal.

11. The method of any one of claims 1 to 9, wherein the second information is determined according to the first information by operations as follows:
in response to a cell barred indication in the first information being used for barring the access of the first terminal, a cell barred indication in the second information is used for barring the access of the first terminal;
in response to the cell barred indication in the first information being used for allowing the access of the first terminal, the cell barred indication in the second information is used for barring the access of the first terminal, or the cell barred indication in the second information is used for allowing the access of the first terminal;
in response to the first information comprising at least one resource pool indication for the first terminal, the cell barred indication in the second information is used for allowing the access of the first terminal; and
in response to the first information comprising no at least one resource pool indication for the first terminal, the cell barred indication in the second information is used for barring the access of the first terminal.

12. The method of any one of claims 1 to 11, wherein the second information is determined according to the first information by operations as follows:
in response to the first information comprising at least one resource pool indication for the first terminal, the second information comprises at least one resource pool indication for the first terminal, or the second information comprises no at least one resource pool indication for the first terminal;
in response to the first information comprising no at least one resource pool indication for the first terminal, the second information comprises no at least one resource pool indication for the first terminal; and
in response to the cell barred indication in the first information being used for allowing the access of the first terminal, the second information comprises the at least one resource pool indication for the first terminal.

13. The method of any one of claims 1 to 8, wherein the first terminal is at least one of a reduced capability (RedCap) terminal or a non-RedCap terminal.

14. The method of any one of claims 4, 7 and 8, wherein the terminal types are distinguished by at least one of a transmission rate, a number of receiving antennas, a number of transmitting antennas, a maximum bandwidth, a supported frequency range, or a terminal scenario.

15. The method of any one of claims 1 to 14, wherein the first information is used for controlling the first terminal to perform at least one of accessing to a network through an Uu interface, or accessing to the relay terminal through a proximity communication (PC5) interface.

16. A method for access control, applied to a remote terminal, comprising:
receiving second information broadcast by a relay terminal, wherein the second information is used for barring access of a first terminal, or the second information is used for allowing the access of the first terminal.

17. The method of claim 16, wherein the second information comprises at least one cell barred indication,
the at least one cell barred indication in the second information is used for barring the access of the first terminal, or the at least one cell barred indication in the second information is used for allowing the access of the first terminal.

18. The method of claim 16 or 17, further comprising:
in response to the remote terminal being the first terminal, performing network access according to the cell barred indication in the second information.

19. The method of claim 17 or 18, wherein
the at least one cell barred indication in the second information corresponds to at least one cell.

20. The method of claim 19, wherein
for each of the at least one cell, different cell barred indications in at least one cell barred indication corresponding to the cell correspond to first terminals of different terminal types.

21. The method of claim 20, further comprising:
in response to the remote terminal being the first terminal and a terminal type of the remote terminal is a first type, performing network access according to a target cell barred indication,
wherein the target cell barred indication is an indication corresponding to the first type among at least one cell barred indication in the second information.

22. The method of claim 16, wherein
in response to the second information comprising at least one resource pool indication for the first terminal, the second information is used for allowing the access of the first terminal; and
in response to the second information comprising no at least one resource pool indication for the first terminal, the second information is used for barring the access of the first terminal.

23. The method of claim 22, further comprising:
in response to the remote terminal being the first terminal and the at least one resource pool indication being received, accessing, by the remote terminal, to a network; and
in response to the remote terminal being the first terminal and no at least one resource pool indication being received, not accessing, by the remote terminal, to the network.

24. The method of claim 21 or 22, wherein the at least one resource pool indication in the second information corresponds to at least one cell.

25. The method of claim 24, wherein
for each of the at least one cell, different resource pool indications in at least one resource pool indication corresponding to the cell correspond to first terminals of different terminal types.

26. The method of claim 25, wherein
resource pools corresponding to different terminal types do not overlap in at least one of time domain or frequency domain.

27. The method of any one of claims 22 to 26, wherein the first terminal comprises: a reduced capability (RedCap) terminal and a non-RedCap terminal,
a resource pool for the RedCap terminal does not overlap with a resource pool for the non-RedCap terminal in at least one of the time domain or the frequency domain.

28. The method of any one of claims 16 to 26, wherein the first terminal is at least one of a reduced capability (RedCap) terminal or a non-RedCap terminal.

29. The method of any one of claims 20, 21, 25 and 26, wherein the terminal types are distinguished by at least one of a transmission rate, a number of receiving antennas, a number of transmitting antennas, a maximum bandwidth, a supported frequency range, or a terminal scenario.

30. The method of any one of claims 16 to 29, wherein the first information is used for controlling the first terminal to perform at least one of accessing to a network through an Uu interface or accessing to the relay terminal through a proximity communication (PC5) interface.

31. The method according to any one of claims 16 to 30, wherein
in response to the remote terminal being the first terminal and the second information being used for allowing the access of the first terminal, correcting a first signal strength according to an offset value to obtain a second signal strength, wherein the first signal strength is a received reference signal strength of a relay terminal; and
in response to the second signal strength being greater than or equal to an access strength threshold, accessing to the relay terminal.

32. The method of claim 31, wherein the offset value is determined by at least one of manners as follows:
the offset value is configured by a network device;
the offset value is pre-configured by the remote terminal; or
the offset value is determined based on a difference between a power level of the relay terminal and a power level of the remote terminal.

33. A method for access control, applied to a network device, comprising:
sending first information to a relay terminal, wherein the first information is used for barring access of a first terminal, or the first information is used for allowing the access of the first terminal.

34. The method of claim 33, wherein the first information comprises at least one cell barred indication,
the at least one cell barred indication in the first information is used for barring access of the first terminal, or the at least one cell barred indication in the first information is used for allowing the access of the first terminal.

35. The method of claim 34, wherein
the at least one cell barred indication in the first information corresponds to at least one cell.

36. The method of claim 35, wherein
for each of the at least one cell, different cell barred indications in at least one cell barred indication corresponding to the cell correspond to first terminals of different terminal types.

37. The method of claim 33, wherein
in response to the first information comprising at least one resource pool indication for the first terminal, the first information is used for allowing the access of the first terminal; and
in response to the first information comprising no at least one resource pool indication for the first terminal, the first information is used for barring the access of the first terminal.

38. The method of claim 37, wherein
the at least one resource pool indication in the first information corresponds to at least one cell.

39. The method of claim 38, wherein
for each of the at least one cell, different resource pool indications in at least one resource pool indication corresponding to the cell correspond to first terminals of different terminal types.

40. The method of claim 39, wherein
resource pools corresponding to different terminal types do not overlap with each other in at least one of time domain or frequency domain.

41. The method of any one of claims 33 to 40, wherein the first terminal comprises: a reduced capability (RedCap) terminal and a non-RedCap terminal,
a resource pool for the RedCap terminal does not overlap with a resource pool for the non-RedCap terminal in at least one of the time domain or the frequency domain.

42. The method of any one of claims 33 to 40, wherein the first terminal is at least one of a reduced capability (RedCap) terminal or a non-RedCap terminal.

43. The method of any one of claims 36, 39 and 40, wherein the terminal types are distinguished by at least one of a transmission rate, a number of receiving antennas, a number of transmitting antennas, a maximum bandwidth, a supported frequency range, or a terminal scenario.

44. The method of any one of claims 29 to 37, wherein the first information is used for controlling the first terminal to perform at least one of accessing to a network through an Uu interface; or accessing to the relay terminal through a proximity communication (PC5) interface.

45. A method for access control, applied to a remote terminal, comprising:
correcting a first signal strength according to an offset value to obtain a second signal strength, wherein the first signal strength is a received reference signal strength of a relay terminal; and
in response to the second signal strength being greater than an access strength threshold, accessing to the relay terminal.

46. The method of claim 45, wherein the offset value is determined by at least one of manners as follows:
the offset value is configured by a network device;
the offset value is pre-configured by the remote terminal; or
the offset value is determined based on a difference between a power level of the relay terminal and a power level of the remote terminal.

47. A relay terminal, comprising:
a receiver configured to receive first information sent by a network device, wherein the first information is used for barring access of a first terminal, or the first information is used for allowing the access of the first terminal; and
a transmitter configured to broadcast second information to a remote terminal, wherein the second information is determined according to the first information.

48. The relay terminal of claim 47, wherein the first information comprises at least one cell barred indication,
the at least one cell barred indication in the first information is used for barring the access of the first terminal, or the at least one cell barred indication in the first information is used for allowing the access of the first terminal.

49. The relay terminal of claim 48, wherein
the at least one cell barred indication in the first information corresponds to at least one cell.

50. The relay terminal of claim 49, wherein
for each of the at least one cell, different cell barred indications in at least one cell barred indication corresponding to the cell correspond to first terminals of different terminal types.

51. The relay terminal of claim 47, wherein in response to the first information comprising at least one resource pool indication for the first terminal, the first information is used for allowing the access of the first terminal; and
in response to the first information comprising no at least one resource pool indication for the first terminal, the first information is used for barring the access of the first terminal.

52. The relay terminal of claim 51, wherein
the at least one resource pool indication in the first information corresponds to at least one cell.

53. The relay terminal of claim 52, wherein
for each of the at least one cell, different resource pool indications in at least one resource pool indication corresponding to the cell correspond to first terminals of different terminal types.

54. The relay terminal of claim 52, wherein
resource pools corresponding to different terminal types do not overlap with each other in at least one of time domain or frequency domain.

55. The relay terminal of any one of claims 51 to 54, wherein the first terminal comprises: a reduced capability (RedCap) terminal and a non-RedCap terminal,
a resource pool for the RedCap terminal does not overlap with a resource pool for the non-RedCap terminal in at least one of the time domain or the frequency domain.

56. The relay terminal of any one of claims 47 to 55,
wherein the second information comprises at least one cell barred indication,
the cell barred indication in the second information is used for barring the access of the first terminal, or the cell barred indication in the second information is used for allowing the access of the first terminal.

57. The relay terminal of any one of claims 47 to 56, wherein the second information is determined according to the first information by operations as follows:
in response to a cell barred indication in the first information being used for barring the access of the first terminal, a cell barred indication in the second information is used for barring the access of the first terminal;
in response to the cell barred indication in the first information being used for allowing the access of the first terminal, the cell barred indication in the second information is used for barring the access of the first terminal, or the cell barred indication in the second information is used for allowing the access of the first terminal;
in response to the first information comprising at least one resource pool indication for the first terminal, the cell barred indication in the second information is used for allowing the access of the first terminal; and
in response to the first information comprising no at least one resource pool indication for the first terminal, the at least one cell barred indication in the second information is used for barring the access of the first terminal.

58. The relay terminal of any one of claims 47 to 57, wherein the second information is determined according to the first information by operations as follows:
in response to the first information comprising at least one resource pool indication for the first terminal, the second information comprises at least one resource pool indication for the first terminal, or the second information comprises no at least one resource pool indication for the first terminal;
in response to the first information comprising no at least one resource pool indication for the first terminal, the second information comprises no at least one resource pool indication for the first terminal;
in response to the cell barred indication in the first information being used for barring the access of the first terminal, the second information comprises no at least one resource pool indication for the first terminal;
in response to the cell barred indication in the first information being used for allowing the access of the first terminal, the second information comprises at least one resource pool indication for the first terminal.

59. The relay terminal of any one of claims 47 to 54, wherein the first terminal is at least one of a reduced capability (RedCap) terminal or a non-RedCap terminal.

60. The relay terminal according to any one of claims 50, 53 and 54, wherein the terminal types are distinguished by at least one of a transmission rate, a number of receiving antennas, a number of transmitting antennas, a maximum bandwidth, a supported frequency range, or a terminal scenario.

61. The relay terminal of any one of claims 47 to 60, wherein the first information is used for controlling the first terminal to perform at least one of accessing to a network through an Uu interface, or accessing to the relay terminal through a proximity communication (PC5) interface.

62. A remote terminal, comprising:
a receiver configured to receive second information sent by a relay terminal, wherein the second information is used for barring access of a first terminal, or the second information is used for allowing the access of the first terminal.

63. The remote terminal of claim 62, wherein the second information comprises at least one cell barred indication,
the at least one cell barred indication in the second information is used for barring the access of the first terminal, or the at least one cell barred indication in the second information is used for allowing the access of the first terminal.

64. The remote terminal of claim 62 or 63, wherein the remote terminal further comprises:
a processor configured to perform network access according to the cell barred indication in the second information in response to the remote terminal being the first terminal.

65. The method of claim 63 or 64, wherein
the at least one cell barred indication in the second information corresponds to at least one cell.

66. The method of claim 65, wherein
for each of the at least one cell, different cell barred indications in at least one cell barred indication corresponding to the cell correspond to first terminals of different terminal types.

67. The remote terminal of claim 66, wherein the remote terminal further comprises:
a processor configured to perform network access according to a target cell barred indication in response to the remote terminal being the first terminal and a terminal type of the remote terminal being a first type,
wherein the target cell barred indication is an indication corresponding to the first type among at least one cell barred indication.

68. The remote terminal of claim 62, wherein
in response to the second information comprising at least one resource pool indication for the first terminal, the second information is used for allowing the access of the first terminal; and
in response to the second information comprising no at least one resource pool indication for the first terminal, the second information is used for barring the access of the first terminal.

69. The remote terminal of claim 68, further comprising: a processor configured to:
access to a network in response to the remote terminal being the first terminal and the at least one resource pool indication being received; and
not access to a network in response to the remote terminal being the first terminal and no at least one resource pool indication being received.

70. The remote terminal of claim 68 or 69, wherein
the at least one resource pool indication in the second information corresponds to at least one cell.

71. The method of claim 70, wherein
for each of the at least one cell, different resource pool indications in at least one resource pool indication corresponding to the cell correspond to first terminals of different terminal types.

72. The remote terminal of claim 71, wherein
resource pools corresponding to different terminal types do not overlap with each other in at least one of time domain or frequency domain.

73. The remote terminal of any one of claims 68 to 72, wherein the first terminal comprises: a reduced capability (RedCap) terminal and a non-RedCap terminal,
wherein a resource pool for the RedCap terminal does not overlap with a resource pool for the non-RedCap terminal in at least one of the time domain or the frequency domain.

74. The remote terminal of any one of claims 62 to 72, wherein the first terminal is at least one of a reduced capability (RedCap) terminal or a non-RedCap terminal.

75. The remote terminal of any one of claims 66, 37, 71 and 72, wherein the terminal types are distinguished by at least one of a transmission rate, a number of receiving antennas, a number of transmitting antennas, a maximum bandwidth, a supported frequency range, or a terminal scenario.

76. The remote terminal of any one of claims 62 to 75, wherein the second information is used for controlling the first terminal to perform at least one of accessing to a network through an Uu interface; or accessing to the relay terminal through a proximity communication (PCS) interface.

77. The remote terminal of any one of claims 62 to 76, wherein
in response to the remote terminal being the first terminal and the second information being used for allowing the access of the first terminal, the remote terminal is configured to correct a first signal strength according to a offset value to obtain a second signal strength, wherein the first signal strength is a received reference signal strength of a relay terminal; and
in response to the second signal strength being greater than or equal to an access strength threshold, the remote terminal is configured to accesses to the relay terminal.

78. The remote terminal of claim 77, wherein the offset value is determined by at least one of manners as follows:
the offset value is configured by a network device;
the offset value is preconfigured by the remote terminal; or
the offset value is determined based on a difference between a power level of the relay terminal and a power level of the remote terminal.

79. A network device, comprising:
a transmitter configured to send first information to a relay terminal, wherein the first information is used for barring access of a first terminal, or the first information is used for allowing the access of the first terminal.

80. The network device of claim 79, wherein the first information comprises at least one cell barred indication,
the at least one cell barred indication in the first information is used for barring the access of the first terminal, or the at least one cell barred indication in the first information is used for allowing the access of the first terminal.

81. The method of claim 80, wherein
the at least one cell barred indication in the first information corresponds to at least one cell.

82. The method of claim 81, wherein
for each of the at least one cell, different cell barred indications in at least one cell barred indication corresponding to the cell correspond to first terminals of different terminal types.

83. The network device of claim 33, wherein
in response to the first information comprising at least one resource pool indication for the first terminal, the first information is used for allowing the access of the first terminal; and
in response to the first information comprising no at least one resource pool indication for the first terminal, the first information is used for barring the access of the first terminal.

84. The network device of claim 83, wherein
the at least one resource pool indication in the first information corresponds to at least one cell.

85. The method of claim 84, wherein
for each of the at least one cell, different resource pool indications in at least one resource pool indication corresponding to the cell correspond to first terminals of different terminal types.

86. The network device of claim 85, wherein
resource pools corresponding to different terminal types do not overlap with each other in at least one of time domain or frequency domain.

87. The network device of any one of claims 79 to 86, wherein the first terminal comprises: a reduced capability (RedCap) terminal and a non-RedCap terminal,
a resource pool for the RedCap terminal does not overlap with a resource pool for the non-RedCap terminal in at least one of the time domain or the frequency domain.

88. The network device of any one of claims 79 to 86, wherein the first terminal is at least one of a reduced capability (RedCap) terminal or a non-RedCap terminal.

89. The network device of any one of claims 82, 85 and 86, wherein the terminal types are distinguished by at least one of a transmission rate, a number of receiving antennas, a number of transmitting antennas, a maximum bandwidth, a supported frequency range, or a terminal scenario.

90. The network device of any one of claims 79 to 89, wherein the first information is used for controlling the first terminal to perform at least one of accessing to a network through an Uu interface; or accessing to the relay terminal through a proximity communication (PC5) interface.

91. A remote terminal, comprising:
a processor configured to correct a first signal strength according to an offset value to obtain a second signal strength, wherein the first signal strength is a received reference signal strength of a relay terminal; and
access to the relay terminal in response to the second signal strength being greater than an access strength threshold.

92. The remote terminal of claim 91, wherein the offset value is determined by at least one of manners as follows:
the offset value is configured by a network device;
the offset value is preconfigured by the remote terminal; or
the offset value is determined based on a difference between a power level of the relay terminal and a power level of the remote terminal.

93. A relay terminal, comprising:
a receiving module configured to receive first information sent by a network device, wherein the first information is used for barring access of a first terminal, or the first information is used for allowing the access of the first terminal; and
a sending module configured to broadcast second information to a remote terminal, wherein the second information is determined according to the first information.

94. A remote terminal, comprising:
a receiving module configured to receive second information sent by a relay terminal, wherein the second information is used for barring access of a first terminal, or the second information is used for allowing the access of the first terminal.

95. A network device, comprising:
a sending module configured to broadcast first information for a current cell, wherein the first information is used for barring access of a first terminal, or the first information is used for allowing the access of the first terminal.

96. A remote terminal, comprising: a processing module configured to
correct a first signal strength according to an offset value to obtain a second signal strength, wherein the first signal strength is a received reference signal strength of a relay terminal; and
access to the relay terminal in response to the second signal strength being greater than an access strength threshold.

97. A computer-readable storage medium comprising a computer instruction that, when executed on a computer, causes the processor to perform one of:
the method of any one of claims 1 to 15; or,
the method of any one of claims 16 to 32; or,
the method of any one of claims 33 to 44; or,
the method of claim 45 or 46.
